(19) Europäisches Patentamt / European Patent Office / Office européen des brevets

(11) **EP 3 443 626 B1**

(12) **EUROPÄISCHE PATENTSCHRIFT**

(45) Veröffentlichungstag und Bekanntmachung des Hinweises auf die Patenterteilung:
**25.10.2023  Patentblatt 2023/43**

(21) Anmeldenummer: **17728475.9**

(22) Anmeldetag: **30.05.2017**

(51) Internationale Patentklassifikation (IPC):
*H02H 1/00* (2006.01)      *H02H 3/44* (2006.01)
*H02H 3/38* (2006.01)      *H02H 3/50* (2006.01)

(52) Gemeinsame Patentklassifikation (CPC):
**H02H 1/0015; H02H 3/38**

(86) Internationale Anmeldenummer:
**PCT/EP2017/062980**

(87) Internationale Veröffentlichungsnummer:
**WO 2017/207535 (07.12.2017 Gazette 2017/49)**

(54) **STÖRLICHTBOGENERKENNUNGSEINHEIT**

ARC FAULT IDENTIFICATION UNIT

UNITÉ DE DÉTECTION D'ARCS ÉLECTRIQUES PARASITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:
31.05.2016   PCT/EP2016/062274
31.05.2016   PCT/EP2016/062273
31.05.2016   PCT/EP2016/062272
31.05.2016   DE 102016209445
31.05.2016   DE 102016209444
31.05.2016   DE 102016209443
31.05.2016   PCT/EP2016/062271

(43) Veröffentlichungstag der Anmeldung:
**20.02.2019  Patentblatt 2019/08**

(73) Patentinhaber: **Siemens Aktiengesellschaft
80333 München (DE)**

(72) Erfinder:
• **MEYER, Jörg**
  **01157 Dresden (DE)**
• **SCHEGNER, Peter**
  **01259 Dresden (DE)**
• **WENZLAFF, Karsten**
  **01097 Dresden (DE)**
• **WIDMANN, Stefan**
  **92272 Freudenberg**
  **OT Lintach (DE)**

(74) Vertreter: **Siemens Patent Attorneys
Postfach 22 16 34
80506 München (DE)**

(56) Entgegenhaltungen:
EP-A1- 2 916 455        WO-A1-2009/008871
WO-A1-2009/156513       DE-A1-102013 001 612
US-A1- 2006 012 931     US-A1- 2008 129 307

**Beschreibung**

Die Erfindung betrifft eine Störlichtbogenerkennungseinheit, einen Leistungsschalter, einen Kurzschließer und ein Verfahren zur Störlichtbogenerkennung.

In Niederspannungsstromkreisen bzw. Niederspannungsanlagen respektive Niederspannungsnetzen, d.h. Stromkreise für Spannungen bis 1000 Volt Wechselspannung oder 1500 Volt Gleichspannung, sind Kurzschlüsse meist mit auftretenden Störlichtbögen, wie parallele oder serielle Störlichtbögen, verbunden. Mit Niederspannung sind insbesondere Spannungen gemeint, die größer als die Kleinspannung, mit Werten von 25 Volt oder 50 Volt Wechselspannung sowie 60 Volt oder 120 Volt Gleichspannung sind.

Besonders in leistungsstarken Verteil- und Schaltanlagen können diese Störlichtbögen bei einer nicht ausreichend schnellen Abschaltung zu verheerenden Zerstörungen von Betriebsmitteln, Anlagenteilen oder kompletten Schaltanlagen führen. Um einen länger andauernden und großflächigen Ausfall der Energieversorgung zu vermeiden und Personen- sowie generell Schäden zu reduzieren, ist es erforderlich derartige Störlichtbögen, insbesondere stromstarke bzw. parallele Störlichtbögen, in wenigen Millisekunden zu erkennen und zu löschen. Konventionelle Schutzsysteme von Energieversorgungsanlagen (z.B. Sicherungen und Leistungsschalter) können unter den geforderten zeitlichen Anforderungen keinen zuverlässigen Schutz bieten.

Schaltlichtbögen, wie sie beim elektrischen Schalten, insbesondere an den Kontakten, auftreten, sind nicht gemeint.

Mit Störlichtbögen sind Lichtbögen gemeint, wie sie bei elektrischen Fehlern im Stromkreis bzw. in der Anlage auftreten. Beispielsweise können diese durch Kurzschlüsse bzw. schlechte Verbindungen hervorgerufen werden.

Fließt ein Strom in einem "fast unterbrochenen" Phasenleiter entsteht an der Unterbrechungsstelle ein so genannter serieller Störlichtbogen.

Wenn ein (Fast-)Kurzschluss mit einem anderen Phasenleiter auftritt, wird von einem parallelen Störlichtbogen gesprochen.

Parallele Störlichtbögen können z.B. durch Alterung des Isolationsmaterials oder Präsenz von leitender Verschmutzung zwischen Phasenleitern verursacht werden. Sie können zwischen zwei verschiedenen Phasenleitern, zwischen Phasenleiter (L) und Erdungsleiter (PE), oder zwischen Phasenleiter und Neutralleiter (N) auftreten.

Falls ein Lichtbogen die Eigenschaften eines parallelen und eines seriellen Störlichtbogens darstellt, bezeichnet man dies als kombinierten Störlichtbogen. Wenn von Phasen-, Erdungs- bzw. Neutralleiter gesprochen wird, bezieht sich das nicht nur auf die Leiter, sondern auch auf alle Anlagenteile mit gleichem Potential wie die Phasen-, Erdungs- bzw. Neutralleiter.

Generell stellen Störlichtbögen eine fehlerhafte Verbindung zwischen den Leitern bzw. Anlageteilen unterschiedlichen Potentials her.

Mit Leistungsschalter sind hier insbesondere Schalter für Niederspannung gemeint. Leistungsschalter werden, insbesondere in Niederspannungsanlagen, üblicherweise für Ströme von 63 bis 6300 Ampere eingesetzt. Spezieller werden geschlossene Leistungsschalter, wie Moulded Case Circuit Breaker, für Ströme von 63 bis 1600 Ampere, insbesondere von 125 bis 630 oder 1200 Ampere eingesetzt. Offene Leistungsschalter bzw. Luftleistungsschalter, wie Air Circuit Breaker, werden insbesondere für Ströme von 630 bis 6300 Ampere, spezieller von 1200 bis 6300 Ampere eingesetzt.

Mit Abschaltströmen ist der Strom gemeint, bei der der elektrische Stromkreis üblicherweise unterbrochen wird, beispielsweise durch eine Schutzeinrichtung, wie einem Leistungsschalter.

Leistungsschalter im Sinne der Erfindung können insbesondere eine Steuereinheit bzw. elektronische Auslöseeinheit, auch als Electronic Trip Unit, kurz ETU, bezeichnet, aufweisen.

Leistungsschalter sind Schutzgeräte, die ähnlich wie eine Sicherung funktionieren. Leistungsschalter überwachen den durch sie hindurchfließenden Strom und unterbrechen den elektrischen Strom bzw. Energiefluss zu einer Energiesenke bzw. einem Verbraucher, was als Auslösung bezeichnet wird, wenn Stromgrenzwerte oder Strom-Zeitspannengrenzwerte, d.h. wenn ein Stromwert für eine gewisse Zeitspanne vorliegt, überschritten werden. Die Ermittlung von Auslösebedingungen und das Auslösen eines Leistungsschalters können mittels einer Steuereinheit / elektronischen Auslöseeinheit (ETU) erfolgen. Die Steuereinheit überwacht die Höhe des durch Sensoren, wie Rogowskispulen, gemessenen elektrischen Stromes bzw. zusätzlich in analoger Weise der Spannung oder/und anderer Parameter des elektrischen Stromkreises und bewirkt eine Unterbrechung des elektrischen Stromkreises.

Kurzschließer sind spezielle Einrichtungen zum Kurzschließen von Leitungen bzw. Stromschienen, um definierte Kurzschlüsse zum Schutz von Stromkreisen bzw. Anlagen herzustellen.

Konventionelle Störlichtbogendetektionssysteme werten die durch den Lichtbogen erzeugte Lichtemission aus und detektieren hiermit den Störlichtbogen.

Dies hat den Nachteil, dass parallel zu den elektrischen Leitungen bzw. Stromschienen Lichtwellenleiter bzw. optische Detektionssysteme verlegt werden müssen, um eventuell auftretende Störlichtbögen zu erkennen.

Die WO 2009/008871 A1 offenbart einen Schutzschalter, der für ein Dreiphasensystem eine Überprüfung der einzelnen Phasen auf einen Fehler durchführt.

In der US 2006/012931 A1 ist ein dreipoliger Schalter beschrieben, der für eine Detektion von Störlichtbögen zwischen verschiedenen Phasen und zwischen einer Phase und Erde ausgestaltet ist.

Die EP 2 916 455 A1 offenbart eine Einrichtung zum Detektieren eines seriellen Lichtbogens in einer elektrischen Anlage.

Aufgabe der vorliegenden Erfindung ist es, eine Möglichkeit zur Störlichtbogenerkennung anzugeben, insbesondere eine schnelle Erkennung von Störlichtbögen zu erreichen.

Diese Aufgabe wird durch eine Störlichtbogenerkennungseinheit mit den Merkmalen des Patentanspruchs 1, einen Leistungsschalter gemäß Patentanspruch 12, einen Kurzschließer gemäß Patentanspruch 13 und ein Verfahren mit den Merkmalen des Patentspruchs 14 gelöst.

Erfindungsgemäß ist vorgesehen, dass eine Störlichtbogenerkennungseinheit für einen elektrischen Dreiphasenwechselstromkreis mit drei Phasenleitern und einem Neutralleiter, aufweist:

- jedem Phasenleiter zugeordnete Spannungssensoren, zur periodischen Ermittlung von Phasen-Neutralleiter-Spannungswerten ($u_{L1}$, $u_{L2}$, $u_{L3}$) und Phasen-Phasen-Spannungswerten ($u_{L1-L2}$, $u_{L2-L3}$, $u_{L3-L1}$), wobei hierbei beispielsweise jeweils drei Spannungssensoren vorgesehen sein können, wobei jeweils ein Spannungssensor zwischen einem Phasenleiter und dem Neutralleiter vorgesehen ist, so dass die Phasen-Neutralleiter Spannungswerte direkt, und die Phasen-Phasen-Spannungswerte durch Berechnung ermittelt werden; alternativ kann auf für die Phasen-Phasen-Spannungswerte ein Spannungssensor vorgesehen sein; beispielsweise die Spannungen ermittelt werden durch: Berechnung der verketteten Spannungen:

$$u_{L1-L2}(\nu) = u_{L1}(\nu) - u_{L2}(\nu)$$

$$u_{L2-L3}(\nu) = u_{L2}(\nu) - u_{L3}(\nu)$$

$$u_{L3-L1}(\nu) = u_{L3}(\nu) - u_{L1}(\nu)$$

- jedem Phasenleiter zugeordnete Stromsensoren, zur periodischen Ermittlung von Phasenleiter-Stromgrößen, aus denen der Phasenleiter-Stromwert ($i_{L1}$, $i_{L2}$, $i_{L3}$) und ein Wert für die Änderung des elektrischen Stromes nach der Zeit ($di_{L1}/dt$, $di_{L2}/dt$, $di_{L3}/dt$) ermittelt wird, hierbei kann beispielsweise direkt der Stromwert ermittelt werden und daraus die Änderung des Stromes nach der Zeit, beispielsweise mit einem herkömmlichen Stromsensor; alternativ kann auch die Änderung des Stromes nach der Zeit ermittelt werden, z.B. durch eine Rogowskispule, und daraus durch Integration der Strom ermittelt werden;
- einer Auswerteeinheit, die mit den Spannungs- und Stromsensoren verbunden ist und derart ausgestaltet ist, dass:
- aus den Phasenleiter-Stromwerten ($i_{L1}$, $i_{L2}$, $i_{L3}$) jeweils die Stromdifferenzen zweier Phasenleiter als verkettete Ströme ermittelt werden ($i_{L1-L2}$, $i_{L2-L3}$, $i_{L3-L1}$) und aus den Werten für die Änderung des elektrischen Stromes nach der Zeit pro Phase ($di_{L1}/dt$, $di_{L2}/dt$, $di_{L3}/dt$) jeweils die Änderungsdifferenzen zweier Phasenleiter als verkettete Änderungsstromwerte ermittelt werden, beispielsweis durch:

Berechnung der verketteten Ströme:

$$i_{L1-L2}(\nu) = i_{L1}(\nu) - i_{L2}(\nu)$$

$$i_{L2-L3}(\nu) = i_{L2}(\nu) - i_{L3}(\nu)$$

$$i_{L3-L1}(\nu) = i_{L3}(\nu) - i_{L1}(\nu)$$

Berechnung des Stromdifferenzials, d.h. der Änderung des elektrischen Stromes nach der Zeit, von den Strömen: $i_{L1}$, $i_{L2}$, $i_{L3}$, $i_{L1-L2}$, $i_{L2-L3}$, $i_{L3-L1}$, $i_E$

Beispielsweise durch:

$$\frac{di}{dt}\bigg|_{\nu-1} = f_A \left( \frac{i_\nu - i_{\nu-2}}{2} \right)$$

- aus den Phasenleiter-Stromwerten ($i_{L1}$, $i_{L2}$, $i_{L3}$) ein Erdstrom ($i_E(\nu)$) ermittelt wird, insbesondere ist der Erdstrom die Summe der Leiterströme:

$$i_E(\nu) = i_{L1}(\nu) + i_{L2}(\nu) + i_{L3}(\nu)$$

- für jeden Phasen-Stromwert ($i_{L1}$, $i_{L2}$, $i_{L3}$) und dem Erdstrom ($i_E(\nu)$) jeweils ein Stromeffektivwert ($I(\nu)$) ermittelt wird, insbesondere kann der Stromeffektivwert wie folgt berechnet werden:

$$I(\nu) = \sqrt{\frac{1}{2}\left[ i(\nu)^2 + \left( \frac{1}{\omega} \cdot \frac{di}{dt}\bigg|_\nu \right)^2 \right]}$$

$\omega = 2 \cdot \pi \cdot f_{Netz}$; $f_{Netz}$ = 50Hz (als Beispiel für ein 50 Hertz Netz, alternativ: 60 Hertz für UL Netze)
Ergebnis der Berechnung: $I_{L1}, I_{L2}, I_{L3}, I_E$
- der jeweilige Stromeffektivwert jeweils mit einem ersten, zweiten, dritten und vierten Stromschwellwert (SSW1, SSW2, SSW3, SSW4) verglichen wird und jeweils bei dessen Überschreitung ein erstes, zweites, drittes oder viertes Überstromsignal ($F_{L1}$, $F_{L2}$, $F_{L3}$, $F_E$) abgegeben wird, insbesondere:
Schwellwertvergleich für die Ströme: $I_{L1}$, $I_{L2}$, $I_{E3}$, $I_E$

$$F(\nu) = \begin{cases} 0 & \text{für} \quad I(\nu) < I_{frei}^{LB} \\ 1 & \text{für} \quad I(\nu) \geq I_{frei}^{LB} \end{cases}$$

Ergebnis: $F_{L1}$, $F_{L2}$, $F_{L3}$, $F_E$ als erste, zweite, dritte und vierte Überstromsignale.

| Einstellwert | Einstellbereich | Empf. Einstellung |
|---|---|---|
| Schwellwert $I_{frei,L1}^{LB}$ | 0...100000 A | 1.000 A |
| Schwellwert $I_{frei,L2}^{LB}$ | 0...100000 A | 1.000 A |
| Schwellwert $I_{frei,L3}^{LB}$ | 0...100000 A | 1.000 A |
| Schwellwert $I_{frei,E}^{LB}$ | 0...100000 A | 1.000 A |

- aus den Phasen-Neutralleiter-Spannungswerten ($u_{L1}$, $u_{L2}$, $u_{L3}$), Phasen-Phasen-Spannungswerten ($u_{L1-L2}$, $u_{L2-L3}$, $u_{L3-L1}$), Phasenleiter-Stromwerten ($i_{L1}$, $i_{L2}$, $i_{L3}$), verketten Strömen ($i_{L1-L2}$, $i_{L2-L3}$, $i_{L3-L1}$), Werten für die Änderung des elektrischen Stromes nach der Zeit ($di_{L1}/dt$, $di_{L2}/dt$, $di_{L3}/dt$) und verketteten Änderungsstromwerten pro Phase-Neutralleiter und pro Phase-Phase jeweils eine erste, zweite, dritte, vierte, fünfte und sechste Lichtbogenspannung berechnet wird, die mit ersten bis sechsten Schwellwerten verglichen wird, so dass ein erstes bis sechstes Störlichtbogenerkennungssignal abgeben wird, insbesondere durch mindestens einen der folgenden (I.-V.) (Teil)Schritte:
I.) Berechnung der Signumfunktion von den Strömen:
$i_{L1}$, $i_{L2}$, $i_{L3}$, $i_{L1-L2}$, $i_{L2-L3}$, $i_{L3-L1}$

$$s(\nu) = \begin{cases} 0 & \text{für} \quad |u_m(\nu)| \leq U_{I-RLs}^s \\ sgn(i(\nu)) & \text{für} \quad |u_m(\nu)| > U_{I-RLs}^s \end{cases}$$

Ergebnis : $s_{L1}$, $s_{L2}$, $s_{L3}$, $s_{L1\text{-}L2}$, $s_{L2\text{-}L3}$, $s_{L3\text{-}L1}$
Einstellbereich Wert

| Schwellwert | $U^s_{I-RLs}$ | 0...1000 V | 12 V |
|---|---|---|---|

II.) Numerische Integration für 3 Integrationsbereiche

1. Numerische Integration der Spannungen
$u_{L1}$, $u_{L2}$, $u_{L3}$, $u_{L1\text{-}L2}$, $u_{L2\text{-}L3}$, $u_{L3\text{-}L1}$

$$u_s = \frac{\Delta t}{2}\left[u_m(v_A) + 2\sum_{k=v_A+1}^{v_E-1} u_m(k) + u_m(v_E)\right]; \quad \Delta t = \frac{1}{f_A} = \frac{1}{50\text{kHz}} = 20\mu s$$

$$u_s = \Delta t\left[\sum_{k=v_A}^{v_E} u_m(k)\right];$$

Dies ist eine zweite Berechnungsmethode. Idealerweise kann die gleiche Berechnungsmethode für alle Integrationen verwendet.

Ergebnis für 1. Integrationsbereich:
$u_{s1,L1}$, $u_{s1,L2}$, $u_{s1,L3}$, $u_{s1,L1\text{-}L2}$, $u_{s1,L2\text{-}L3}$, $u_{s1,L3\text{-}L1}$
Ergebnis für 2. Integrationsbereich:
$u_{s2,L1}$, $u_{s2,L2}$, $u_{s2,L3}$, $u_{s2,L1\text{-}L2}$, $u_{s2,L2\text{-}L3}$, $u_{s2,L3\text{-}L1}$
Ergebnis für 3. Integrationsbereich:
$u_{s3,L1}$, $u_{s3,L2}$, $u_{s3,L3}$, $u_{s3,L1\text{-}L2}$, $u_{s3,L2\text{-}L3}$, $u_{s3,L3\text{-}L1}$

2. Numerische Integration der Ströme $i_{L1}$, $i_{L2}$, $i_{L3}$, $i_{L1\text{-}L2}$, $i_{L2\text{-}L3}$, $i_{L3\text{-}L1}$

$$i_s = \frac{\Delta t}{2}\left[i_m(v_A) + 2\sum_{k=v_A+1}^{v_E-1} i_m(k) + i_m(v_E)\right]; \quad \Delta t = \frac{1}{f_A} = \frac{1}{50\text{kHz}} = 20\mu s$$

$$i_s = \Delta t\left[\sum_{k=v_A}^{v_E} i_m(k)\right];$$

Ergebnis für 1. Integrationsbereich:
$i_{s1,L1}$, $i_{s1,L2}$, $i_{s1,L3}$, $i_{s1,L1\text{-}L2}$, $i_{s1,L2\text{-}L3}$, $i_{s1,L3\text{-}L1}$
Ergebnis für 2. Integrationsbereich:
$i_{s2,L1}$, $i_{s2,L2}$, $i_{s2,L3}$, $i_{s2,L1\text{-}L2}$, $i_{s2,L2\text{-}L3}$, $i_{s2,L3\text{-}L1}$
Ergebnis für 3. Integrationsbereich:
$i_{s3,L1}$, $i_{s3,L2}$, $i_{s3,L3}$, $i_{s3,L1\text{-}L2}$, $i_{s3,L2\text{-}L3}$, $i_{s3,L3\text{-}L1}$

3. Numerische Integration der Stromänderungen

$$\frac{di_{L1}}{dt}, \frac{di_{L2}}{dt}, \frac{di_{L3}}{dt}, \frac{di_{L1-L2}}{dt}, \frac{di_{L2-L3}}{dt}, \frac{di_{L3-L1}}{dt}$$

$$i'_s = \frac{\Delta t}{2}\left[\frac{di_m}{dt}(v_A) + 2\sum_{k=v_A+1}^{v_E-1} \frac{di_m}{dt}(k) + \frac{di_m}{dt}(v_E)\right]; \quad \Delta t = \frac{1}{f_A} = \frac{1}{50\text{kHz}} = 20\mu s$$

$$i'_s = \Delta t\left[\sum_{k=v_A}^{v_E} \frac{di_m}{dt}(k)\right];$$

Ergebnis für 1. Integrationsbereich:

$i_{s1,L1}$, $i_{s1,L2}$, $i_{s1,L3}$, $i_{s1,L1-L2}$, $i_{s1,L2-L3}$, $i_{s1,L3-L1}$
Ergebnis für 2. Integrationsbereich:

$i_{s2,L1}$, $i_{s2,L2}$, $i_{s2,L3}$, $i_{s2,L1-L2}$, $i_{s2,L2-L3}$, $i_{s2,L3-L1}$
Ergebnis für 3. Integrationsbereich:

$i_{s3,L1}$, $i_{s3,L2}$, $i_{s3,L3}$, $i_{s3,L1-L2}$, $i_{s3,L2-L3}$, $i_{s3,L3-L1}$

4. Numerische Integration des Signums $s_{L1}$, $s_{L2}$, $s_{L3}$, $s_{L1-L2}$, $s_{L2-L3}$, $s_{L3-L1}$

$$s_s = \frac{\Delta t}{2}\left[s(\nu_A) + 2\sum_{k=\nu_A+1}^{\nu_E-1} s(k) + s(\nu_E)\right]; \quad \Delta t = \frac{1}{f_A} = \frac{1}{50\text{kHz}} = 20\mu s$$

$$s_s = \Delta t\left[\sum_{k=\nu_A}^{\nu_E} s(k)\right];$$

Ergebnis für 1. Integrationsbereich:

$s_{s1,L1}$, $s_{s1,L2}$, $s_{s1,L3}$, $s_{s1,L1-L2}$, $s_{s1,L2-L3}$, $s_{s1,L3-L1}$
Ergebnis für 2. Integrationsbereich:

$s_{s2,L1}$, $s_{s2,L2}$, $s_{s2,L3}$, $s_{s2,L1-L2}$, $s_{s2,L2-L3}$, $s_{s2,L3-L1}$
Ergebnis für 3. Integrationsbereich:

$s_{s3,L1}$, $s_{s3,L2}$, $s_{s3,L3}$, $s_{s3,L1-L2}$, $s_{s3,L2-L3}$, $s_{s3,L3-L1}$

Einstellwerte für die Festlegung der Integrationsintervalle:

| Einstellwert | Einstellbereich | Empf. Einstellung |
|---|---|---|
| $\nu_{A1}$ | -1000...0 | -150 |
| $\nu_{E1}$ | -1000...0 | -101 |
| $\nu_{A2}$ | -1000...0 | -100 |
| $\nu_{E2}$ | -1000...0 | -51 |
| $\nu_{A3}$ | -1000...0 | -50 |
| $\nu_{E3}$ | -1000...0 | -1 |

III.) Lösen des I-RLs-Algorithmus (Berechnung der Lichtbogenspannung)

$$U_{LB} = \begin{cases} 0\,V & \text{für} \quad s_{s1} \wedge s_{s2} \wedge s_{s3} = 0 \\ U_{LB^*} & \text{für} \quad s_{s1} \vee s_{s2} \vee s_{s3} \neq 0 \end{cases}$$

$$U_{LB^*} = \frac{(u_{s3}i_{s2} - u_{s2}i_{s3})(i'_{s2}i_{s1} - i'_{s1}i_{s2}) - (u_{s2}i_{s1} - u_{s1}i_{s2})(i'_{s3}i_{s2} - i'_{s2}i_{s3})}{(s_{s1}i_{s2} - s_{s2}i_{s1})(i'_{s3}i_{s2} - i'_{s2}i_{s3}) - (s_{s2}i_{s3} - s_{s3}i_{s2})(i'_{s2}i_{s1} - i'_{s1}i_{s2})}$$

Ergebnis : $U_{LB,L1}$, $U_{LB,L2}$, $U_{LB,L3}$, $U_{LB,L1-L2}$, $U_{LB,L2-L3}$, $U_{LB,L3-L1}$
IV.) Nachbearbeitung der Berechnungsergebnisse:
Berechnung des Medians $\tilde{U}_{LB}(\nu)$ für den Bereich $\nu - m$ bis $\nu - 1$ Ergebnis : $\tilde{U}_{LB,L1}$, $\tilde{U}_{LB,L2}$, $\tilde{U}_{LB,L3}$, $\tilde{U}_{LB,L1-L2}$, $\tilde{U}_{LB,L2-L3}$, $U_{LB,L3-L1}$

| Einstellwert | Einstellbereich | Empf. Einstellung |
|---|---|---|
| $m$ | 0...1000 | 50 |

V.) Schwellwertvergleich für den Median der Lichtbogenspannung:
$\tilde{U}_{LB,L1}$, $\tilde{U}_{LB,L2}$, $\tilde{U}_{LB,L3}$, $\tilde{U}_{LB,L1-L2}$, $\tilde{U}_{LB,L2-L3}$, $U_{LB,L3-L1}$

$$D(v) = \begin{cases} 0 & \text{für} \quad \widetilde{U}_{LB}(v) < U_{I-RLs}^{LB} \\ 1 & \text{für} \quad \widetilde{U}_{LB}(v) \geq U_{I-RLs}^{LB} \end{cases}$$

Ergebnis: $D_{L1}$, $D_{L2}$, $D_{L3}$, $D_{L1-L2}$, $D_{L2-L3}$, $D_{L3-L1}$ als erstes bis sechstes Störlichtbogenerkennungssignal.

- dass aus den Phasen-Neutralleiter-Spannungswerten ($u_{L1}$, $u_{L2}$, $u_{L3}$) und Phasen-Phasen-Spannungswerten ($u_{L1-L2}$, $u_{L2-L3}$, $u_{L3-L1}$) jeweils eine siebte bis zwölfte Lichtbogenspannung berechnet wird, die mit siebten bis zwölften Schwellwerten verglichen wird, so dass ein siebtes bis zwölftes Störlichtbogenerkennungssignal abgeben wird, insbesondere durch:

1.) Berechnung des äquivalenten Spannungssprungs der Lichtbogenspannung, beispielsweise mit Hilfe der Berechnung durch den so genannten W-RU-Algorithmus, mit:

$u_{L1}$, $u_{L2}$, $u_{L3}$, $u_{L1-L2}$, $u_{L2-L3}$, $u_{L3-L1}$

$$\Delta U_{\text{äqui}}(v) = \frac{2}{a}\left[ \sum_{k=v-\frac{a}{2}+1}^{v} u_m(k) - \sum_{k=v-a+1}^{v-\frac{a}{2}} u_m(k) \right]$$

Ergebnis : $\Delta U_{\text{äqui,L1}}$, $\Delta U_{\text{äqui,L2}}$, $\Delta U_{\text{äqui,L3}}$, $\Delta U_{\text{äqui,L1-L2}}$, $\Delta U_{\text{äqui,L2-L3}}$, $\Delta U_{\text{äqui,L3-L1}}$

| Einstellwert | Einstellbereich | Empf. Einstellung |
|---|---|---|
| Dilatationsparameter a | 2...1000 | 10 |

2.) Berechnung der Signumfunktion der Stromänderung:

$$\frac{di_{L1}}{dt}, \frac{di_{L2}}{dt}, \frac{di_{L3}}{dt}, \frac{di_{L1-L2}}{dt}, \frac{di_{L2-L3}}{dt}, \frac{di_{L3-L1}}{dt}$$

$$s_{di}(v) = \text{sgn}\left( \left.\frac{di}{dt}\right|_v \right)$$

Ergebnis: $s_{di,L1}$, $s_{di,L2}$, $s_{di,L3}$, $s_{di,L1-L2}$, $s_{di,L2-L3}$, $s_{di,L3-L1}$

3.) Berechnung des lichtbogenbezogenen Spannungssprungs:

$$U_{\text{äqui}}^{LB}(v) = U_{\text{äqui}}(v) \cdot s_{di}(v)$$

Ergebnis: $U_{\text{äqui,L1}}^{LB}$, $U_{\text{äqui,L2}}^{LB}$, $U_{\text{äqui,L3}}^{LB}$, $U_{\text{äqui,L1-L2}}^{LB}$, $U_{\text{äqui,L2-L3}}^{LB}$, $U_{\text{äqui,L3-L1}}^{LB}$

4.) Schwellwertvergleich für den lichtbogenbezogenen Spannungssprung:

$U_{\text{äqui,L1}}^{LB}$, $U_{\text{äqui,L2}}^{LB}$, $U_{\text{äqui,L3}}^{LB}$, $U_{\text{äqui,L1-L2}}^{LB}$, $U_{\text{äqui,L2-L3}}^{LB}$, $U_{\text{äqui,L3-L1}}^{LB}$

$$U_{\text{äqui}}^{LBs}(v) = \begin{cases} 0 & \text{für} \quad U_{\text{äqui}}^{LB}(v) < U_{W-RU}^{LB} \\ U_{\text{äqui}}^{LB} & \text{für} \quad U_{\text{äqui}}^{LB}(v) \geq U_{W-RU}^{LB} \end{cases}$$

Ergebnis: $U_{\text{äqui,L1}}^{LBs}$, $U_{\text{äqui,L2}}^{LBs}$, $U_{\text{äqui,L3}}^{LBs}$, $U_{\text{äqui,L1-L2}}^{LBs}$, $U_{\text{äqui,L2-L3}}^{LBs}$, $U_{\text{äqui,L3-L1}}^{LBs}$

| Einstellwert | Einstellbereich | Empf. Einstellung |
|---|---|---|
| Schwellwert $U^{LB}_{W-RU}$ | 0...1000 V | 12 V |

5.) Berechnung des summierten Spannungssprungs der Lichtbogenspannung, Berechnung des relativen, äquivalenten Spannungssprungs:

$$U^{a}_{\text{äqui}}(v) = \begin{cases} 0 & \text{für} \quad U^{LBs}_{\text{äqui}}(v) = 0 \\ \dfrac{U^{LBs}_{\text{äqui}}(v)}{a} & \text{für} \quad U^{LBs}_{\text{äqui}}(v) \neq 0 \end{cases}$$

Ergebnis: $U^{a}_{\text{äqui,L1}}$, $U^{a}_{\text{äqui,L2}}$, $U^{a}_{\text{äqui,L3}}$, $U^{a}_{\text{äqui,L1-L2}}$, $U^{a}_{\text{äqui,L2-L3}}$, $U^{a}_{\text{äqui,L3-L1}}$

6.) Berechnung des summierten, äquivalenten Spannungssprungs:

$$U^{\text{sum}}_{\text{äqui}}(v) = \sum_{k=v-b+1}^{v} U^{aR}_{\text{äqui}}(k)$$

Ergebnis: $U^{\text{sum}}_{\text{äqui,L1}}$, $U^{\text{sum}}_{\text{äqui,L2}}$, $U^{\text{sum}}_{\text{äqui,L3}}$, $U^{\text{sum}}_{\text{äqui,L1-L2}}$, $U^{\text{sum}}_{\text{äqui,L2-L3}}$, $U^{\text{sum}}_{\text{äqui,L3-L1}}$

| Einstellwert | Einstellbereich | Empf. Einstellung |
|---|---|---|
| Summationsparameter *b* | 0...1000 | 50 |

7.) Schwellwertvergleich für den summierten, äquivalenten Spannungssprung: $U^{\text{sum}}_{\text{äqui,L1}}$, $U^{\text{sum}}_{\text{äqui,L2}}$, $U^{\text{sum}}_{\text{äqui,L3}}$, $U^{\text{sum}}_{\text{äqui,L1-L2}}$, $U^{\text{sum}}_{\text{äqui,L2-L3}}$, $U^{\text{sum}}_{\text{äqui,L3-L1}}$

$$W(v) = \begin{cases} 0 & \text{für} \quad U^{\text{sum}}_{\text{äqui}}(v) < U^{LB}_{W-Rus} \\ 1 & \text{für} \quad U^{\text{sum}}_{\text{äqui}}(v) \geq U^{LB}_{W-Rus} \end{cases}$$

Ergebnis: $W_{L1}$, $W_{L2}$, $W_{L3}$, $W_{L1-L2}$, $W_{L2-L3}$, $W_{L3-L1}$ als siebte bis zwölfte Störlichtbogenerkennungssignale.
- dass ein ausgangsseitiges Störlichtbogenerkennungssignal $S_{LB}$ abgegeben wird, wenn mindestens ein Überstromsignal und ein Störlichtbogenerkennungssignal vorliegt.

In einer Ausgestaltung wird ein ausgangsseitiges Störlichtbogenerkennungssignal $S_{LB}$ nur dann abgegeben wird, wenn mindestens ein Überstromsignal und ein Störlichtbogenerkennungssignal innerhalb einer Zeitspanne, d.h. zeitgleich oder annähernd zeitgleich vorliegt, alternativ wenn die Auswertung innerhalb einer so genannten Fehlerschleifen bzw. Fehlerschleifenselektiv erfolgt, d.h. die Bedingungen müssen zeitgleich für die gleiche oder parallele Fehlerschleife(n) vorliegen.

Dies hat den besonderen Vorteil, dass eine umfassende Erkennung von Störlichtbögen ermöglicht wird, da mittels zweier Funktionen und einer Überstromerkennung das Vorliegen solcher geprüft wird. Störlichtbögen treten häufig erst bei höheren Strömen auf. Dies wird erfindungsgemäß bei der Auswertung berücksichtigt. Somit können verschiedenartige Störlichtbögen erfasst werden und ein umfassender Anlagenschutz realisiert werden. Zudem ist das Verfahren sehr schnell, so dass eine schnelle Erkennung und kurzfristige Abschaltung von Störlichtbögen erfolgen kann.

Vorteilhafte Ausgestaltungen der Erfindung sind in den Unteransprüchen angegeben.

In einer vorteilhaften Ausgestaltung der Erfindung ist der Dreiphasenwechselstromkreis ein Niederspannungsstromkreis. Dies hat den besonderen Vorteil, dass hier die Erfindung besonders wirkungsvoll eingesetzt werden kann.

In einer vorteilhaften Ausgestaltung der Erfindung werden der zu messende Strom oder die ermittelten Stromgrößen mit einem Tiefpass gefiltert, so dass an Stelle der Phasenleiter-Stromwerte ($i_{L1}$, $i_{L2}$, $i_{L3}$, $i_E$) und Werte für die Änderung des elektrischen Stromes nach der Zeit ($di_{L1}/dt$, $di_{L2}/dt$, $di_{L3}/dt$, $di_E/dt$) gefilterte Phasenleiter-Stromwerte ($i_{F,L1}$, $i_{F,L2}$, $i_{F,L3}$, $i_{F,E}$) und gefilterte Werte für die Änderung des elektrischen Stromes nach der Zeit ($di_{F,L1}/dt$, $di_{F,L2}/dt$, $di_{F,L3}/dt$, $di_{F,E}/dt$) vorliegen, die für zumindest für einen Teil der weiteren Berechnung, insbesondere für die Berechnung der Stromeffektivwerte, verwendet werden.

Dies hat den besonderen Vorteil, dass die Berechnung durch Oberschwingungsanteile nur gering verfälscht wird und so eine zuverlässige Störlichtbogenerkennung ermöglicht wird.

In einer vorteilhaften Ausgestaltung der Erfindung weist das Tiefpassfilter eine Grenzfrequenz im Bereich 50 Hertz bis 10000 Hertz, insbesondere im Bereich 50 Hertz bis 1000 Hertz, spezieller von 300 Hertz, auf.

Dies hat den besonderen Vorteil, dass hiermit eine besonders gute Störlichtbogenerkennung ermöglicht wird.

In einer vorteilhaften Ausgestaltung der Erfindung ist das Tiefpassfilter ein Filter im Bereich 1 bis 6 Ordnung.

Dies hat den besonderen Vorteil, dass hiermit eine besonders gute Störlichtbogenerkennung ermöglicht wird.

In einer vorteilhaften Ausgestaltung der Erfindung wird ein ausgangsseitiges Störlichtbogenerkennungssignal abgegeben, wenn mindestens ein Überstromsignal und ein Störlichtbogenerkennungssignal der gleichen Phasen-Neutralleiter oder Phasen-Phasen Basis vorliegt.

Dies hat den besonderen Vorteil, dass in kritischen Fällen nur dann ein Störlichtbogensignal abgegeben wird, wenn mit hoher Wahrscheinlichkeit ein Störlichtbogen vorliegt.

In einer vorteilhaften Ausgestaltung der Erfindung wird aus den Phasen-Neutralleiter-Spannungswerten ($u_{L1}$, $u_{L2}$, $u_{L3}$) und Phasen-Phasen-Spannungswerten ($u_{L1-L2}$, $u_{L2-L3}$, $u_{L3-L1}$) jeweils eine siebte bis zwölfte Lichtbogenspannung derart berechnet, dass pro Phasen-Neutralleiter- und Phasen-Phasen-Spannungswerten:

- fortlaufend eine erste Hälfte einer ersten Anzahl Spanungswerte ($u(n)$, $u(k)$) zu einer ersten Teilsumme (TS1) und die zweite Hälfte an Spannungswerten ($u(n)$, $u(k)$) zu einer zweiten Teilsumme (TS2) aufsummiert wird,

  eine Differenz (DU) beider Teilsummen ermittelt wird,

  dass bei einer betragsmäßigen Überschreitung dieser siebten bis zwölften Differenz (DU) gegenüber den siebten bis zwölften Schwellwerten ein siebtes bis zwölftes Störlichtbogenerkennungssignal abgegeben wird.

Dies hat den besonderen Vorteil, dass hiermit eine besonders genaue Störlichtbogenerkennung durch Ermittlung eines Spannungssprunges ermöglicht wird.

In einer vorteilhaften Ausgestaltung der Erfindung wird fortlaufend eine zweite Anzahl Differenzen (DU) zu einer Differenzensumme (DS) aufsummiert, an Stelle der Differenz (DU) die Differenzsumme (DS) mit Schwellwert verglichen wird und bei dessen betragsmäßiger Überschreitung ein Störlichtbogenerkennungssignal abgegeben wird.

Dies hat den besonderen Vorteil, dass hiermit eine noch genauere Störlichtbogenerkennung ermöglicht wird.

In einer vorteilhaften Ausgestaltung der Erfindung wird aus den Phasen-Neutralleiter-Spannungswerten ($u_{L1}$, $u_{L2}$, $u_{L3}$), Phasen-Phasen-Spannungswerten ($u_{L1-L2}$, $u_{L2-L3}$, $u_{L3-L1}$), Phasenleiter-Stromwerten ($i_{L1}$, $i_{L2}$, $i_{L3}$), verketten Strömen ($i_{L1-L2}$, $i_{L2-L3}$, $i_{L3-L1}$), Werten für die Änderung des elektrischen Stromes nach der Zeit ($di_{L1}/dt$, $di_{L2}/dt$, $di_{L3}/dt$) und verketteten Änderungsstromwerten pro Phase-Neutralleiter und pro Phase-Phase jeweils die erste, zweite, dritte, vierte, fünfte und sechste Lichtbogenspannung durch eine Integralgleichung oder deren Lösung durchgeführt.

Dies hat den besonderen Vorteil, dass eine umfassende Berechnungsmöglichkeit unter Berücksichtigung vieler Parameter eines realen Stromkreises zur Verfügung steht.

In einer vorteilhaften Ausgestaltung außerhalb der Erfindung werden die elektrischen Spannungswerte oder/und Stromgrößen mit einem festen Zeitabstand (dt) ermittelt.

Dies hat den besonderen Vorteil, dass eine besonders genaue Ermittlung von Störlichtbögen ermöglicht wird, da Werte mit regelmäßigem Abstand vorliegen und so die Störlichtbogenkriterien besonders gut ermittelt werden können.

In einer vorteilhaften Ausgestaltung der Erfindung ist die Störlichtbogenerkennungseinheit derart ausgestaltet, dass die Spannungswerte mit einem Vielfachen der Frequenz des Niederspannungsstromkreises ermittelt werden oder mit einer Abtastfrequenz im Bereich von 2-100 kHz, insbesondere im Bereich 10 bis 40 oder 60 kHz, spezifischer bei 40-50 kHz.

Dies hat den besonderen Vorteil, dass eine optimale Anzahl an Spannungswerten für die erfindungsgemäße Auswertung vorliegt. Bei einer Netzfrequenz des Niederspannungsstromkreises von 50 oder 60 Hz liegen so ca. 1000 Spannungswerte pro Grundwelle der Netzfrequenz vor. Bei dieser Anzahl hat sich eine gute Erkennung von Störlichtbögen mit der Erfindung gezeigt.

In einer vorteilhaften Ausgestaltung der Erfindung, bei der Teilsummen ermittelt werden, ist die Auswerteeinheit derart ausgestaltet, dass die erste Anzahl durch ein Zeitfenster bestimmt ist. D.h. die Anzahl an aufzusummierenden Stromwerten wird durch ein zu verwendendes Zeitfenster bestimmt. Aus dem Zeitfenster, dass beispielsweise im Bereich von 0,1 bis 5 ms oder 10 ms liegen kann, insbesondere bei 1 ms liegen kann, ergibt sich ferner durch die verwendete Abtastfrequenz die erste Anzahl an Spannungswerten.

Dies hat den besonderen Vorteil, dass die Auswertung fortlaufend erfolgt und so eine besonders genaue Erkennung von Störlichtbögen ermöglicht wird.

In einer vorteilhaften Ausgestaltung außerhalb der Erfindung, bei der Teilsummen ermittelt werden, ist die Auswerteeinheit derart ausgestaltet, dass die Differenz (DU) mit einem Faktor multipliziert wird, dessen Größe von der ersten Anzahl abhängig ist. Insbesondere ist der Faktor ein Produkt aus einer Konstanten und dem Kehrwert der ersten Anzahl.

Dies hat den besonderen Vorteil, dass eine normierte Differenz (DU) zur Verfügung steht, die mit einem normierten ersten Schwellwert verglichen wird. Somit wird eine Auswertung mit objektivem Vergleich ermöglicht.

In einer vorteilhaften Ausgestaltung der Erfindung, bei der Teilsummen ermittelt werden, ist die Auswerteeinheit derart ausgestaltet, dass fortlaufend eine zweite Anzahl Differenzen (DU) zu einer Differenzensumme (DS) aufsummiert wird, an Stelle der Differenz (DU) die Differenzsumme (DS) mit dem Schwellwert verglichen wird und bei dessen betragsmäßiger Überschreitung ein Störlichtbogenerkennungssignal abgegeben. Dies hat den besonderen Vorteil, dass eine noch genauere Ermittlung von Störlichtbögen ermöglicht wird, da sich die Differenzen, die bei Störlichtbögen auftreten, summieren. Damit steht ein genauerer bzw. größerer Wert für den Schwellwertvergleich zur Verfügung.

In einer vorteilhaften Ausgestaltung außerhalb der Erfindung sind die Sensoren extern angeordnet, d.h. müssen nicht im Gehäuse der Störlichtbogenerkennungseinheit angeordnet sein. Die periodische bzw. fortlaufende Ermittlung von Wertepaaren eines Spannungswertes und einer Stromgröße, insbesondere zu einem Zeitpunkt, kann beispielsweise durch eine Abtastung der entsprechenden Werte erfolgen.

Dies hat den besonderen Vorteil, dass eine flexible Ermittlung von Störlichtbögen gegeben ist.

Erfindungsgemäß ist ferner ein Leistungsschalter für einen elektrischen Stromkreis, insbesondere Niederspannungsstromkreis, vorgesehen. Dieser weist eine erfindungsgemäße Störlichtbogenerkennungseinheit auf. Diese ist mit dem Leistungsschalter verbunden, wobei diese derart ausgestaltet sind, dass bei Abgabe eines Störlichtbogenerkennungssignals der Leistungsschalter auslöst, d.h. den elektrischen Stromkreis unterbricht. Somit kann eine Löschung des Störlichtbogens erreicht werden. Weist der Leistungsschalter eine elektronische Auslöseeinheit auf, kann eine sehr schnelle Auslösung des Leistungsschalters bei Vorliegen eines Störlichtbogenerkennungssignals erreicht werden.

Dies hat den besonderen Vorteil, dass ein Leistungsschalter um eine weitere, vorteilhafte Funktionalität zum Schutz elektrischer Anlagen erweitert wird. Die Erkennung und Abschaltung von Störlichtbögen erfolgt dabei vorteilhaft in einem Gerät. Gegebenenfalls lassen sich vorhandene Baugruppen, wie Spannungs- oder/und Stromsensoren, Netzteil, Mikroprozessoren für die Auswerteeinheit, etc. mitverwenden und so Synergien erzielen.

Erfindungsgemäß ist ferner ein Kurzschließer, aufweisend eine Störlichtbogenerkennungseinheit, die mit dem Kurzschließer verbunden ist, vorgesehen. Diese sind derart ausgestaltet, dass bei Abgabe eines Störlichtbogenerkennungssignals der Kurzschließer den elektrischen Stromkreis kurzschließt, um ein Löschen des Störlichtbogens zu bewirken.

Dies hat den besonderen Vorteil, dass eine einfache, schnelle und wirksame Möglichkeit zum Löschen von Störlichtbögen zur Verfügung steht.

Erfindungsgemäß ist des Weiteren ein Verfahren zur Störlichtbogenerkennung für einen elektrischen Stromkreis vorgesehen. Dies hat den besonderen Vorteil eines einfachen Verfahrens zur Störlichtbogenerkennung.

Alle Ausgestaltungen und Merkmale der Erfindung bewirken eine Verbesserung der Erkennung von Störlichtbögen bzw. deren Löschung.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Hierbei zeigt:

Figur 1 ein Diagramm des zeitlichen Spannungs- und Stromverlaufes nach Lichtbogenzündung

Figur 2 ein Ersatzschaltbild eines elektrischen Stromkreises

Figur 3 ein erstes Blockschaltbild einer erfindungsgemäßen Lösung

Figur 4 ein zweites Blockschaltbild einer erfindungsgemäßen Lösung

Figur 5 eine erste Darstellung zur Erläuterung der Erfindung

Figur 6 eine erste Darstellung zur Erläuterung des Einsatzes der Erfindung

Figur 7 eine zweite Darstellung zur Erläuterung des Einsatzes der Erfindung

Figur 8 eine dritte Darstellung zur Erläuterung des Einsatzes der Erfindung

Figur 9 eine vierte Darstellung zur Erläuterung des Einsatzes der Erfindung

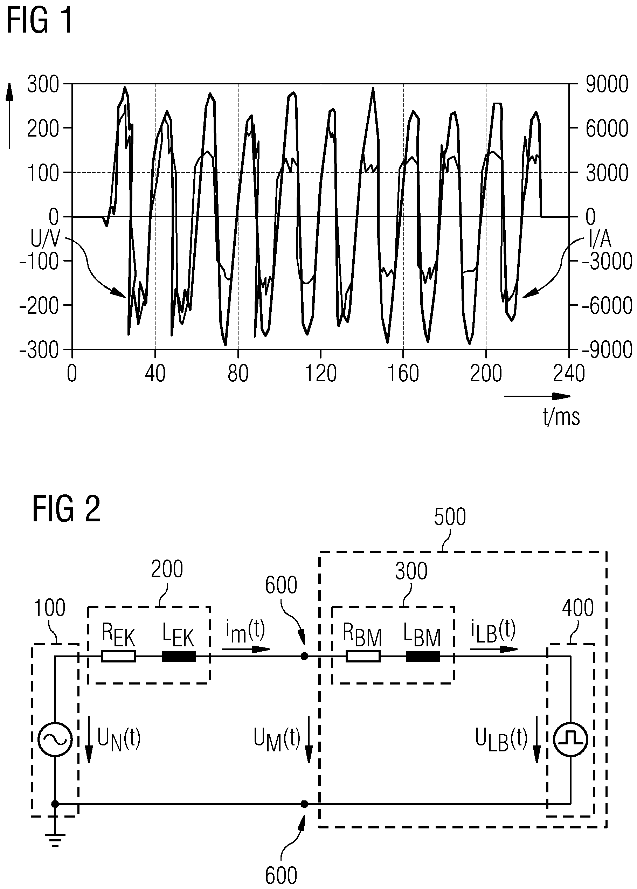

In einem Stromkreis bzw. Netz, in dem ein Störlichtbogen brennt, kann ein Strom- und Spannungsverlauf gemessen werden, der einen signifikanten Verlauf aufweist. Ein typischer Spannungs- und Stromverlauf für einen Störlichtbogen ist in Figur 1 dargestellt. Diese zeigt eine Darstellung eines Diagramms, in dem der zeitliche Verlauf der elektrischen Spannung U und des elektrischen Stromes I nach Zündung eines Lichtbogens bzw. Störlichtbogens, insbesondere parallelen Störlichtbogen, in einem elektrischen Stromkreis, insbesondere Niederspannungsstromkreis, dargestellt ist.

Auf der horizontalen X-Achse ist die Zeit t in Millisekunden (ms) dargestellt. Auf der vertikalen Y-Achse ist auf der linken Skalierung die Größe der elektrischen Spannung U in Volt (V) abgebildet. Auf der rechten Skalierung ist die Größe des elektrischen Stromes I in Ampere (A) abgebildet.

Nach Lichtbogenzündung verläuft der Strom I annähernd sinusförmig. Die Spannung U verläuft stark verzerrt, etwa "zackenförmig", mit schnellen Spannungsänderungen. Grob interpretiert ist der Spannungsverlauf in erster Näherung rechteckförmig, an Stelle eines üblicherweise sinusförmigen Verlaufs. Abstrahiert betrachtet, lässt sich im Spannungsverlauf eine Rechteckform erkennen, die auf dem Plateau einen hoch stochastischen Anteil aufzeigt. Die Rechteckform ist dadurch gekennzeichnet, dass es bei der Lichtbogenzündung und in den nachfolgenden Spannungsnulldurchgängen der Wechselspannung zu signifikant erhöhten Spannungsänderungen kommt, die folgend als Spannungssprung bezeichnet werden, da der Anstieg der Spannungsänderung im Vergleich zu einem sinusförmigen Spannungsverlauf wesentlich größer ist.

Im Gegensatz zum Spannungsverlauf weist der Stromverlauf von einem Störlichtbogen einen nahezu sinusförmigen Verlauf auf. Zum Zeitpunkt der Lichtbogenzündung kommt es jedoch zu einer Reduzierung des Stromanstiegs, die sich mit der physikalischen, strombegrenzenden Wirkung von Lichtbögen begründen lässt. Zusätzlich tritt eine signifikante Anstiegsänderung im Stromverlauf in jedem weiteren Stromnulldurchgang nach einer Lichtbogenzündung auf.

Erfindungsgemäß sollen derartige Spannungsänderungen bzw. Spannungssprünge zur Störlichtbogenerkennung verwendet werden. Ferner soll die Lichtbogenspannung berechnet werden. Die Erkennung soll dabei erfindungsgemäß durch mindestens zwei unterschiedliche Ermittlungsmethoden durchgeführt werden.

Hierzu werden periodisch, mit beispielsweise einer festen Abtastzeit bzw. Abtastfrequenz fa Spannungswerte und Stromgrößen eines elektrischen Stromkreises ermittelt, erfasst, abgetastet bzw. gemessen. Dabei sollte die Abtastfrequenz bzw. Meßfrequenz ein Vielfaches der Frequenz der gemessenen Wechselgrößen betragen. Beispielsweise könnte bei üblichen Stromnetzen, mit beispielsweise 50Hz bzw. 60Hz Netzfrequenz, die Meßfrequenz im Kilohertz-Bereich liegen, beispielsweise zwischen 1 und 200 kHz, spezifischer im Bereich 10 bis 40 oder 60 kHz, insbesondere bei 40-50 kHz.

Fortlaufend bzw. periodisch werden diese elektrische Spannungswerte und elektrische Stromwerte ermittelt, beispielsweise mit je einem Sensor. In einem Dreiphasenwechselstromkreis werden dabei insbesondere die Spannungen zwischen Phase und Neutralleiter

3x Leiter-Neutralleiter-Spannung: $u_{L1}$, $u_{L2}$, $u_{L3}$

sowie zwischen den Phasen

$$u_{L1-L2}(v) = u_{L1}(v) - u_{L2}(v)$$

$$u_{L2-L3}(v) = u_{L2}(v) - u_{L3}(v)$$

$$u_{L3-L1}(v) = u_{L3}(v) - u_{L1}(v)$$

ermittelt, wie bereits dargestellt. Dabei kann beispielsweise der elektrische Strom

3x Leiter-Strom: $i_{L1}$, $i_{L2}$, $i_{L3}$ (bzw. allgemein $i_m$)

direkt gemessen werden. Alternativ kann auch die Änderung des Stromes nach der Zeit gemessen werden.

Im Falle der Messung des elektrischen Stromes $i_m$ kann daraus die Änderung des Stromes nach der Zeit $i'_m$ ermittelt werden, beispielsweise durch Differentiation des Stromwertes $i_m$.

Im Falle der Messung der Änderung des elektrischen Stromes nach der Zeit $i'_m$ kann daraus der elektrische Strom $i_m$ ermittelt werden, beispielsweise durch Integration der Änderung des elektrischen Stromes nach der Zeit $i'_m$. Die Messung der Änderung des elektrischen Stromes nach der Zeit $i'_m$ kann beispielsweise mit einer Rogowskispule erfolgen. Im Falle sinusförmiger Ströme im Stromkreis ist die Integration besonders einfach zu realisieren, da das Intergral vom Sinus ein Cosinus und vom Cosinus ein Sinus ist.

Ebenso kann der Stromwert $i_m$ und die Änderung des Stromes nach der Zeit $i'_m$ auch parallel, z.B. mit 2 Sensoren, gemessen werden. Damit erübrigt sich eine Umrechnung.

Mit einem zeitlichen Abstand, beispielsweise einem festen zeitlichen Abstand dt (Abtastfrequenz), werden immer wieder Spannungswerte $u_{L1}(v)$, $u_{L2}(v)$, $u_{L3}(v)$ (allgemein: um oder $u_m$) und Stromwerte $i_{L1}(v)$, $i_{L2}(v)$, $i_{L3}(v)$ (allgemein: im bzw. $i_m$) bzw. Werte für die Änderung des elektrischen Stromes nach der Zeit i'm ermittelt.

Dabei werden beispielsweise ein Spannungswert und eine Stromgröße jeweils zu einem, insbesondere gleichen, Zeitpunkt ermittelt.

Die Störlichtbogenerkennung bzw. -funktion erfolgt einerseits beispielsweise mit einer Teilsummenberechnung, auch als W-RU oder W-RUs bezeichnet, wie weiter vorn dargestellt. Dieser soll in allgemeiner Form noch einmal näher erläutert werden.

Erfindungsgemäß soll der Spannungssprung bei der Lichtbogenzündung und in jedem darauf folgenden Spannungsnulldurchgang erkannt werden um einen Störlichtbogen zu detektieren. Ein wesentlicher Vorteil bei der Extraktion dieser Signaleigenschaft im Spannungsverlauf ist das periodische Auftreten. Somit kann eine zusätzliche Detektionssicherheit erreicht werden, wenn gewollt oder ungewollt das erste Auftreten der Signaleigenschaft bei der Lichtbogenzündung nicht zu einer Detektion des Störlichtbogens führt.

Für die Extraktion dieser Signaleigenschaft soll erfindungsgemäß eine Summation mit Differenzberechnung verwendet werden, die als W-RU und in einer Ausgestaltung als W-RUs Verfahren bezeichnet werden soll.

Die Auswertung erfolgt dahingehend, dass eine Differenz bzw. ein Spannungssprung DU eingeführt wird. Dieser wird wie folgt ermittelt, wobei die Spannungswerte um bzw. $u_m$ im Folgenden auch in Abhängigkeit vom Zeitpunkt als u(k) bzw. u(n) gekennzeichnet sind:

$$\mathrm{DU}(n) \;=\; \sum_{k=n-(j-1)}^{k=n-\frac{j}{2}} u(k) \;-\; \sum_{k=n-(\frac{j}{2}-1)}^{k=n} u(k) \tag{1}$$

wobei:

u(k)  Spannungswert zum (zurückliegenden) Zeitpunkt k
u(n)  Spannungswert zum aktuellen Zeitpunkt n
DU(n)  Differenz zum aktuellen Zeitpunkt n
j  erste Anzahl, d.h. Anzahl an Zeitpunkten bzw. Abtastwerten die für die Berechnung der Differenz verwendet werden

Mit der obigen Formel wird für einen aktuell gemessenen Spannungswert u(n) die Differenz DU(n) ermittelt. Als Basis für die Berechnung dient die erste Anzahl j, die beispielsweise eine feste Zahl sein kann. Beispielsweise wird eine feste Zahl j an Abtastwerten für jede Berechnung verwendet. Beispielsweise kann j im Bereich 10 bis 100 liegen, insbesondere im Bereich 40-50.

Für den Fall j=40 soll die Berechnung dargestellt werden.

Verwendet wird hierzu der aktuell gemessene Spannungswert u(n) und die davorliegenden respektive zurückliegenden bzw. vergangenen 39 Spannungswerte

```
u(n-1) bis u(n-(40-1)),
```

d.h.

```
u(n-1) bis u(n-40+1),
```

d.h.

$$u(n-1) \text{ bis } u(39).$$

In Summe (j=)40 Spannungswerte.

Für die erste Teilsumme (TS1) werden die Spannungswerte u(k) für

$$k = n-(j-1) = n-(40-1) = n-39$$

bis

$$k = n-j/2 = n-40/2 = n-20$$

aufsummiert, also vom zurückliegenden (älteren) 39sten Spannungswert bis zum zurückliegenden (jüngeren) 20sten Spannungswert, in Summe 20 Werte.

Als zweite Teilsumme (TS2) werden die Spannungswerte u(k) für

$$k = n-(j/2-1) = n-(40/2-1) = n-19$$

bis

$$k = n$$

aufsummiert, also vom zurückliegenden 19ten Spannungswert bis zum aktuellen Spannungswert u(n), in Summe ebenfalls 20 Spannungswerte .

Die Differenz DU beider Teilsummen wird mit einem, von der Anzahl j abhängigen, Schwellwert, d.h. je nachdem welcher Spannungswert betrachtet wird, Phase-Phase bzw. Phase-Neutralleiter, einer der sieben bis zwölften Schwellwerte, wobei die Schwellwerte für die Phase-Phase-Beziehung betragsmäßig identisch und für die Phase-Neutralleiter-Beziehung betragsmäßig identisch sein können, betragsmäßig verglichen. Bei dessen Überschreitung wird, je nachdem welche Beziehung betroffen ist, ein siebtes bis zwölftes Störlichtbogenerkennungssignal: $W_{L1}$, $W_{L2}$. $W_{L3}$, $W_{L1-L2}$, $W_{L2-L3}$, $W_{L3-L1}$ abgegeben.

Hierbei werden jeweils die Hälften der ersten Anzahl j aufsummiert. Mit Hälfte im Sinne der Erfindung ist auch ein um einen Wert abweichender halber Wert gemeint. D.h. Es könnten gemäß einer ersten Variante in der ersten Teilsumme 19 Werte und in der zweiten Teilsumme 21 Werte aufsummiert werden. wobei j den Wert 40 hat.

In einer zweiten Variante ist bei einer ungeraden ersten Anzahl j eine unsymmetrische Aufteilung gemeint. D.h. es können in einer ersten Teilsumme beispielsweise 19 Werte aufsummiert und in der zweiten Teilsumme 20 Werte aufsummiert werden, wobei j in diesem Fall den Wert 39 hätte.

Als Teilsummen können auch Mittelwerte verwendet werden, die aus den jeweiligen Spannungswerten ermittelt werden, beispielsweise durch Teilsummen. D.h. es könnte auch ein Mittelwert aus einer stark abweichenden Anzahl an Spannungswerten, beispielsweise pro Teilsumme, gebildet werden.

Alternativ können beide Teilsummen bzw. die Differenz mit einem Faktor, der beispielsweise den Kehrwert der ersten Anzahl j enthält, multipliziert werden, also beispielsweise mit 1/j oder 2/j.

$$DU(n) = \frac{2}{j}\left[\sum_{k=n-j+1}^{k=n-\frac{j}{2}} u(k) \quad - \sum_{k=n-\frac{j}{2}+1}^{k=n} u(k)\right] \qquad (2)$$

Dadurch ist ein betragsmäßiger Vergleich mit einem von der Anzahl der verwendeten Abtastwerte, d.h. von der ersten Anzahl unabhängigen Schwellwert möglich, da die Differenz normiert auf die im Stromkreis verwendete Spannung, d.h. dem äquivalent stattfinden Spannungssprung entspricht.

Der Wert der Differenz ist somit nicht mehr von der Anzahl der Summierungen abhängig, allerdings von der verwendeten Spannung.

Man kann gemäß der ersten oder zweiten Variante die Hälfte in eine erste Teilsummenanzahl g und h aufteilen, wobei j=g+h und g≠h.

$$DU(n) = \frac{1}{g} \sum_{k=n-(g+h)+1}^{k=n-h} u(k) \; - \; \frac{1}{h} \sum_{k=n-h+1}^{k=n} u(k) \qquad (3)$$

Die erste Anzahl j respektive Anzahl verwendeter Abtastwerte j bestimmt über die verwendete Abtastfrequenz den verwendeten Zeitrahmen.

Umgekehrt kann bei vorgegebener Abtastfrequenz und zu überprüfenden Zeitfenster die zu verwendende erste Anzahl ermittelt werden.

Die drei Größen Zeitfenster ta, Abtastfrequenz fa und Anzahl Abtastwerte (=erste Anzahl) j sind jeweilig in einander überführbar, j = ta · fa.

Bei Netzfrequenz des Niederspannungsstromkreises von 50-60Hz hat sich eine Abtastfrequenz von 1 bis 200 kHz, insbesondere 1 bis 60 kHz, spezifischer 40 - 50 kHz, und ein Zeitfenster bzw. eine Dilatationszeit von 0,1 ms bis 5 ms oder 10 ms, insbesondere bei etwa 1 ms, für eine sichere Detektion von Störlichtbögen ergeben. Somit ergibt sich für die erste Anzahl j der benötigten Abtastwerte bzw. Abtastpunkte j = 40 - 50.

Mit Dilatationszeit ist die Ausdehnung des Zeitfensters gemeint, über den man die Teilsummen bzw. den äquivalenten Spannungssprung berechnet.

Die beiden Teilsummen TS1 und TS2 können auch vertauscht sein. D.h. die erste Teilsumme wird von der zweiten Teilsumme abgezogen. Dadurch ändert sich lediglich das Vorzeichen. Beispielsweise kann in analoger Weise bei Wechselstromnetzen nach einem Flankenwechsel, d.h. wenn von einer steigenden Flanke auf eine fallende Flanke der üblicherweise sinusförmigen Wechselspannungen gewechselt wird, ebenfalls ein Vorzeichenwechsel auftreten.

Eine steigende Flanke tritt bei sinusförmigen Spannungen üblicherweise im Bereich 0° bis 90° und 270° bis 360° auf, eine fallende Flanke üblicherweise im Bereich 90° bis 270°.

Bei betragsmäßiger Überschreitung der Differenz DU wird ein Störlichtbogenerkennungssignal abgegeben.

Beispielsweise kann der Schwellwert im Falle einer normierten Berechnung im Bereich 8 Volt bis 300 Volt liegen, insbesondere 10 bis 30 oder 100 Volt, spezifischer im Bereich 15 bis 20 oder 25 Volt.

Wobei darauf verwiesen sei, dass die berechnete Differenz DU bzw. äquivalente Spannungssprung unter dem realen, im Spannungsverlauf erkennbaren, Spannungssprung liegt.

Eine weitere Verbesserung lässt sich durch eine weitere Aufsummierung der Differenzen DU zu einer Differenzsumme DS erreichen. Dies wird im Folgenden auch als W-RUs Verfahren bezeichnet. Bei Störlichtbögen, die keinen großen Spannungssprung erzeugen, kann so eine schnellere Detektion erreicht werden.

Bei dem W-RUs-Verfahren werden einzelne Differenzen bzw. Spannungssprünge, die besonders bei der Lichtbogenzündung in Folge von mehreren kleinen, nacheinander zündenden Lichtbögen auftreten, addiert.

Die ermittelten Differenzen DU werden mit einer zweiten Anzahl z, die im Bereich der ersten Anzahl j liegen aber auch größer oder kleiner sein kann, zu einer Differenzensumme DS aufsummiert. Beispielsweise kann die zweite Anzahl z den einbis vier- bis sechsfachen Wert von j aufweisen.

$$DS(n) = \sum_{k=n-z}^{k=n} DU(k) \qquad (4)$$

z      zweite Anzahl, d.h. Anzahl an Differenzen DU, die für die Berechnung der Differenzensumme verwendet werden

DS(n)      Differenzensumme, bezogen auf den aktuellen Wert n

Die zweite Anzahl z kann hierbei wieder über die Abtastfrequenz fa und das für die Summation zu betrachtende Zeitfenster ts bestimmt werden, z = ts · fa.

Es hat sich gezeigt, dass bei Verwendung der Summation das erste Zeitfenster bzw. die erste Dilatationszeit ta zur Berechnung des einzelnen Spannungssprungs kleiner gewählt werden kann bzw. sollte. Die Zeit ta könnte hierbei etwa 0,05 bis 1 ms betragen, insbesondere bei 0,2 ms liegen.

Ferner hat sich als vorteilhaft herausgestellt, wenn die für die Summation verwendeten Differenzen nicht ein zweites Mal, für die darauffolgende Summation verwendet werden.

Für eine einfache, programmmäßige Umsetzung des Algorithmus, kann beispielsweise für jeden Spannungswert u(n) bzw. Abtastpunkt ein relativer, äquivalenter Spannungssprung bzw. Abtastdifferenz DA(n) pro Spannungswert u(n) bezogen auf die erste Anzahl j bzw. Größe des Dilatationsparameters wie folgt berechnet werden:

$$DA(n) = \frac{DU(n)}{j} \qquad (5)$$

D.h. die Differenz DU wird durch die erste Anzahl j geteilt, um die Abtastdifferenz für einen Spannungswert u(n) zu erhalten. Die berechnete Abtastdifferenz DA(n) beschreibt den relativen, äquivalenten Spannungssprung pro Spannungswert u(n) bzw. Abtastwert.

Beispielsweise wird ein erster Spannungswert u(1) von 36 Volt, ein nachfolgender zweiter Spannungswert u(2) von 40 Volt, ein nachfolgender dritter Spannungswert u(3) von 50 Volt, ein nachfolgender vierter Spannungswert u(4) von 60 Volt, ein nachfolgender fünfter Spannungswert u(5) von 70 Volt, ein nachfolgender sechster Spannungswert u(6) von 72 Volt, ein nachfolgender siebter Spannungswert u(7) von 74 Volt gemessen.

Beispielsweise hat die erste Anzahl j einen Wert von 4.

Gemäß Formel 2 beträgt die erste Teilsumme 76 Volt, die zweite Teilsumme 110 Volt. Die reine Differenz der Teilsummen beträgt 34 Volt, multipliziert mit 2/j, d.h. 2/4, beträgt die Differenz DU(4) 17 Volt. D.h. die Differenz entspricht einem gemittelten Spannungssprung über die 4 Spannungswerte von 17 Volt.

Bezogen auf die ersten vier Spannungswerte u(1), ..., u(4) bzw. Abtastwerte beträgt die Abtastdifferenz DA(4): 17 Volt durch 4 gleich 4,25 Volt (d.h. der relative Spannungssprung pro Spannungswert).

Bezogen auf die nächsten vier Spannungswerte u(2),..., u(5) beträgt die Differenz der Teilsummen 130 Volt - 90 Volt = 40 Volt. Die Differenz DU(5) dann wieder 20 Volt. Die Abtastdifferenz DA(5) 5 Volt (d.h. der relative Spannungssprung pro Spannungswert).

Bezogen auf die nächsten vier Spannungswerte u(3),..., u(6) beträgt die Differenz der Teilsummen 142 Volt - 110 Volt = 32 Volt, die Differenz DU(6) dann 16 Volt, die Abtastdifferenz DA(6) 4 Volt (d.h. der relative Spannungssprung pro Spannungswert) .

Bezogen auf die nächsten vier Spannungswerte u(4),..., u(7) beträgt die Differenz der Teilsummen 146 Volt - 130 Volt = 16 Volt, die Differenz DU(7) dann 8 Volt, die Abtastdifferenz DA(7) 2 Volt (d.h. der relative Spannungssprung pro Spannungswert) .

In einer Ausgestaltung der Erfindung soll nun für jede (fortlaufend) berechnete Abtastdifferenz DA(n) der jeweils maximale Wert aufsummiert werden.

Dazu wird die Abtastdifferenz DA(n) jeweils den j Spannungswerten, die für die Berechnung der Differenz und Abtastdifferenz verwendet wurden, zugeordnet, siehe die nachfolgende Tabelle.

| n | U(n) | DA(1) | DA(2) | DA(3) | DA(4) | DA(5) | DA(6) | DA(7) | DAmax(n) |
|---|------|-------|-------|-------|-------|-------|-------|-------|----------|
| 1 | 36 V | 4,5 V (0 V) | 9,5 V (0 V) | 6,75V (0 V) | 4,25V | | | | 4,25 V |
| 2 | 40 V | | 9,5 V (0 V) | 6,75V (0 V) | 4,25V | 5 V | | | 5 V |
| 3 | 50 V | | | 6,75V (0 V) | 4,25V | 5 V | 4 V | | 5 V |
| 4 | 60 V | | | | 4,25V | 5 V | 4 V | 2 V [0 V] | 5 V |
| 5 | 70 V | | | | | 5 V | 4 V | 2 V [0 V] | 5 V |
| 6 | 72 V | | | | | | 4 V | 2 V [0 V] | 4 V |
| 7 | 74 V | | | | | | | 2 V [0 V] | 2 V [0 V] |

Falls noch nicht die erste Anzahl j Spannungswerte u(n), u(k) für eine Berechnung vorliegen, können die Differenzen bzw. Abtastdifferenzen auf Null gesetzt werden, siehe die in Klammern angegeben Werte von 0 Volt in den Spalten DA(1), DA2, DA(3) .

Aus den j zugeordneten Abtastdifferenzen pro Spannungswert U(n) wird jeweils die maximale Abtastdifferenz DAmax(n) ermittelt. Dabei liegen natürlich für die gerade zurückliegenden Abtastdifferenzen DA(n) nur weniger als j Abtastdifferenzen DA vor, wobei dann die aktuelle bzw. maximale Abtastdifferenz DA der vorliegenden Abtastdifferenzen verwendet wird.

Die maximalen Abtastdifferenzen DAmax pro Spannungswert U(n) werden zu einer Summe der maximalen Abtastdifferenzen SMA aufsummiert, und zwar jeweils eine zweite Anzahl z an maximalen Abtastdifferenzen SMA.

$$\text{SMA(n)} \;=\; \sum_{k=n-z}^{k=n} DAmax(k) \hspace{3cm} (6)$$

Hat die zweite Anzahl z beispielsweise einen Wert von z=6, ergibt sich ein Summe der maximalen Abtastdifferenzen für die ersten 6 maximalen Abtastdifferenzen von SMA(6) = 28,25 Volt.

Die Summe der maximalen Abtastdifferenzen SMA bzw. dessen Betrag wird mit dem Schwellwert verglichen und bei dessen betragsmäßiger Überschreitung ein Störlichtbogenerkennungssignal abgegeben.

Dies hat den Vorteil, dass mehrere in Folge auftretende Spannungssprünge aufsummiert werden und deren Summe für die Auswertung des Vorliegens eines Störlichtbogens verwendet werden.

In einer Ausgestaltung der Erfindung kann ein weiterer Schwellwertvergleich dahingehend vorgesehen sein, dass für die Berechnung der Abtastdifferenz DA(n) der Wert von DU(n) auf Null gesetzt wird, wenn dessen Betrag einen Grenzwert GW unterschreitet.

Für ein Niederspannungsnetz kann dieser Grenzwert GW im Bereich im Bereich 8 Volt bis 50 Volt liegen, insbesondere 10 bis 30, spezifischer im Bereich 10 bis 20 oder 25 Volt liegen.

Er kann auch identisch mit dem Betrag der üblichen Schwellwerte sein bzw. in dessen Größenordnung liegen.

Dies hat den Vorteil, dass der typische - üblicherweise sinusförmige - Spannungsverlauf nicht bzw. weniger berücksichtigt wird.

Beispielsweise könnte gemäß Beispiel die siebte Differenz DU(7), die den Wert 8 Volt aufweist, betragsmäßig unter dem Grenzwert GW liegen, der beispielsweise einen Betrag von 10 Volt aufweist. Damit würde die siebte Abtastdifferenz DA(7) den Wert 0 Volt aufweisen. Dies insbesondere in Spalte DA(7) durch Werte von 0 Volt in eckigen Klammern dargestellt.

Figur 2 zeigt ein Ersatzschaltbild eines elektrischen Stromkreises, wobei ein Dreiphasenwechselstromnetz in analoger Weise realisiert wäre, aufweisend ein elektrische Energiequelle 100, die eine elektrische Netz-Spannung $u_n(t)$ zur Verfügung stellt, ein daran angeschlossenen Netzzugang bzw. ein Einspeise-Kabel 200, dargestellt durch elektrische Ersatzschaltelemente, wie einen Einspeise-Kabel-Widerstand $R_{ek}$ und eine Einspeise-Kabel-Induktivität bzw. Spule $L_{ek}$, dem ein elektrischer Verbraucher, Betriebsmittel bzw. Energiesenke 300 folgt, wiederum dargestellt durch elektrische Ersatzschaltelemente, wie einen Verbraucher-Widerstand $R_{BM}$ und eine Verbraucher-Induktivität bzw. Spule $L_{BM}$. Zwischen Einspeise-Kabel 200 und Verbraucher 300 kann eine elektrische Spannung $u_m(t)$ und eine elektrische Stromgröße, wie der elektrische Stromwert $i_m(t)$ oder/und die Änderung des Stromes nach der Zeit $i'_m(t)$, respektive die erste Ableitung des Stromes nach der Zeit, gemessen werden.

Diese Größen, insbesondere die elektrische Spannung bzw. elektrischen Spannungswerte, werden an den Meßpunkten 600 erfasst, um in der Störlichtbogenerkennungseinheit weiter verarbeitet zu werden.

Der hinsichtlich Störlichtbogen überwachte Bereich ist durch eine gestrichelte Linie 500 dargestellt.

Im elektrischen Stromkreis kann ein Störlichtbogen auftreten, der durch einen Lichtbogen 400 mit einer Lichtbogenspannung $U_{lb}(t)$ dargestellt ist. Erfindungsgemäß wird für die zweite Störlichtbogenerkennungsfunktion fortlaufend eine Lichtbogenspannung $U_{lb}$ in der Störlichtbogenerkennungseinheit mit Hilfe der gemessenen/abgetasteten Spannung $u_m(t)$ und der gemessenen/abgetasteten Stromgröße (Strom oder/und Stromänderung) berechnet.

Erfindungsgemäß wird für die Berechnung die Spannung, der Strom und die Änderung des Stromes nach der Zeit verwendet. Hierzu wird ein solches Wertepaar mindestens einem Wertesatz zugeordnet. In einer bevorzugten Ausführungsform wird ein Wertepaar genau einem Wertesatz zugeordnet. Wesentlich ist, dass ein Wertesatz mindestens ein Wertepaar enthält, das nicht im vorhergehenden oder nachfolgenden Wertesatz enthalten ist.

Erfindungsgemäß wird aus mindestens zwei Wertesätzen eine Lichtbogenspannung berechnet.

In einer bevorzugten Ausgestaltung wird eine feste Anzahl Wertepaare, die beispielsweise zeitlich nacheinander, beispielsweise mit festem zeitlichem Abstand, ermittelt werden, einem Wertesatz zugeordnet. Beispielsweise enthält ein Wertesatz 10 Wertepaare. Die ersten 10 Wertepaare werden dem ersten Wertesatz zugeordnet. Die zweiten 10 Wertepaare werden dem zweiten Wertesatz zugeordnet, die dritten 10 Wertepaare dem dritten Wertesatz usw.

Jeweils mindestens 2 Wertesätze werden für die Ermittlung einer Lichtbogenspannung bzw. eines Störlichtbogens verwendet. Die Berechnung erfolgt fortlaufend, d.h. beispielsweise erste Berechnung mit den Wertesätzen 1 und 2 bzw. 1 bis 3, zweite erfindungsgemäße Berechnung mit den Wertesätzen 2 und 3 bzw. 2 bis 4, usw. (erste Angabe für Berechnung mit 2 Wertesätzen, zweite Angabe für Berechnung mit 3 Wertesätzen).

1.Beispiel:

Beispielsweise werden Wertepaare von 1 bis x (x >_32; x E N) abgetastet und ein Wertesatz besteht aus 10 Wertepaaren. Jeweils 3 Wertesätze werden für die Ermittlung einer Lichtbogenspannung bzw. eines Störlichtbogens verwendet.

Die Wertepaare 1 - 10 werden dem Wertesatz 1 zugeordnet.

Die Wertepaare 11 - 20 werden dem Wertesatz 2 zugeordnet.

Die Wertepaare 21 - 30 werden dem Wertesatz 3 zugeordnet.

Die Berechnung erfolgt fortlaufend, d.h. beispielsweise erste erfindungsgemäße Berechnung mit den Wertepaaren 1 bis 30, zweite erfindungsgemäße Berechnung mit den Wertepaaren 2 bis 31, dritte erfindungsgemäße Berechnung mit den Wertepaaren 3 bis 32, usw. Somit steht zu jedem Abtastpunkt ein Berechnungsergebnis für die anschließende Auswertung zur Verfügung.

2.Beispiel:

Für die Berechnung können sich auch Wertesätze überlagern. D.h. zwei Wertesätze können ein oder mehrere gleiche Wertepaare verwenden. Wobei hier der Grundsatz gilt, dass in jedem Wertesatz mindestens ein weiteres Wertepaar vorhanden sein muss, dass in den anderen Wertessätzen nicht verwendet wird. Beispielsweise es werden Wertepaare von 1 bis x (x ≥ 14; x E N) abgetastet und ein Wertesatz besteht aus 10 Wertepaaren. Jeweils 3 Wertesätze werden für die Ermittlung einer Lichtbogenspannung bzw. eines Störlichtbogens verwendet.

Die Wertepaare 1 - 10 werden dem Wertesatz 1 zugeordnet.

Die Wertepaare 2 - 11 werden dem Wertesatz 2 zugeordnet.

Die Wertepaare 3 - 12 werden dem Wertesatz 3 zugeordnet.

Die Berechnung erfolgt fortlaufend, d.h. beispielsweise erste erfindungsgemäße Berechnung mit den Wertepaaren 1 bis 12, zweite erfindungsgemäße Berechnung mit den Wertepaaren 2 bis 13, dritte erfindungsgemäße Berechnung mit den Wertepaaren 3 bis 14, usw. Somit steht zu jedem Abtastpunkt ein Berechnungsergebnis für die anschließende Auswertung zur Verfügung.

3.Beispiel:

Für die Berechnung können die Wertesätze auch eine unterschiedliche Größe besitzen. Beispielsweise werden Wertepaare von 1 bis x (x ≥ 17; $x \in \mathbb{N}$) abgetastet. Jeweils 3 Wertesätze werden für die Ermittlung einer Lichtbogenspannung bzw. eines Störlichtbogens verwendet, wobei der 1. Wertesatz aus 6 Wertepaaren besteht, der 2. Wertesatz aus 15 Wertepaaren besteht und der 3. Wertesatz aus 9 Wertepaaren besteht.

Die Wertepaare 1 - 6 werden dem Wertesatz 1 zugeordnet.

Die Wertepaare 1 - 15 werden dem Wertesatz 2 zugeordnet.

Die Wertepaare 6 - 15 werden dem Wertesatz 3 zugeordnet.

Die Berechnung erfolgt fortlaufend, d.h. beispielsweise erste erfindungsgemäße Berechnung mit den Wertepaaren 1 bis 15; darin sind die drei Wertesätze enthalten. Die zweite erfindungsgemäße Berechnung mit den Wertepaaren 2 bis 16 und dritte erfindungsgemäße Berechnung mit den Wertepaaren 3 bis 17, usw. Somit steht zu jedem Abtastpunkt ein Berechnungsergebnis für die anschließende Auswertung zur Verfügung.

Im Weiteren können beispielweise die Wertepaare auch nacheinander angeordnet sein und einen Abstand von einer bestimmten Anzahl von Wertepaaren zueinander haben.

Die Berechnung erfolgt dadurch, dass fortlaufend gewisse Terme (mathematische Ausdrücke bzw. Gleichungen) berechnet werden.

Die Berechnung dieser Terme basiert auf einer Lösung der Leitungsgleichung 1.Ordnung:

$$u_m(t) = R_{BM} \cdot i_m(t) + L_{BM} \frac{di_m(t)}{dt} \qquad (1)$$

Unter der Annahme, dass im Niederspannungsnetz ein Störlichtbogen vorhanden ist, so wäre das elektrische Verhalten vergleichbar mit dem einer Gegenspannungsquelle im Netz.

Daraus ergibt sich die folgende, erweiterte Ansatzdifferenzialgleichung:

$$u_m(t) = R_{BM} \cdot i_m(t) + L_{BM} \frac{di_m(t)}{dt} + u_{LB}(t) \qquad (2)$$

Der Störlichtbogen wird vereinfacht als rein ohmscher Verbraucher nachgebildet. Somit wird angenommen, dass die Lichtbogenspannung phasengleich zum Lichtbogenstrom ist. Die Lichtbogenspannung kann somit mit folgender Gleichung beschrieben werden:

$$u_{LB}(t) = U_{LB} \cdot sign\big(i_{LB}(t)\big) \qquad (3)$$

Wird davon ausgegangen, dass der Messstrom $i_m(t)$ dem Störlichtbogenstrom $i_{LB}(t)$ entspricht, also keine Stromverzweigung zwischen Messort und Störlichtbogenbrennstelle vorhanden ist, kann geschrieben werden:

$$u_m(t) = R_{BM} \cdot i_m(t) + L_{BM} \frac{di_m(t)}{dt} + \text{sign}\big(i_m(t)\big) \cdot U_{LB} \tag{4}$$

Zum Lösen dieser erweiterten Ansatzdifferenzialgleichung wird erfindungsgemäß ein integrierendes Lösungsverfahren verwendet. Somit ergibt sich ein vollständiger, integrierender Ansatz :

$$\int u_m(t)\, dt = R_{BM} \int i_m(t)\, dt + L_{BM} \int \frac{di_m(t)}{dt}\, dt + U_{LB} \int \text{sign}\big(i_m(t)\big)\, dt \tag{5}$$

Die Berechnung der Lichtbogenspannung erfolgt durch die weiter oben genannten Schritte. Alternativ kann dies wie folgt durch Umstellen und Auflösen der Gleichung (5) nach $U_{LB}$ erfolgen.

Für die Berechnung wird die folgende Ansatzgleichung verwendet:

$$\begin{aligned}
\int u_m(t)\, dt &= R_{BM} \int i_m(t)\, dt + L_{BM} \int \frac{di_m(t)}{dt}\, dt + U_{LB} \int \text{sign}\big(i_m(t)\big)\, dt \\
&= R_{BM} \int i_m(t)\, dt + L_{BM} \int i'_m(t)\, dt + U_{LB} \int \text{sign}\big(i_m(t)\big)\, dt
\end{aligned} \tag{6}$$

Für die nummerische Integration wird beispielsweise das Sehnentrapezverfahren nach Gleichung (7) verwendet.

$$\int_{t_A}^{t_E} f(t)\, dt \approx \frac{\Delta t}{2}\left[ f(t_A) + 2 \sum_{\nu=1}^{\frac{t_E - t_A}{\Delta t} - 1} f(t_A + \nu \cdot \Delta t) + f(t_E) \right] \tag{7}$$

Für eine vereinfachte Darstellung der Lösung werden die mit der Sehnentrapezregel gelösten Integrationsintervalle durch folgende Terme substituiert:

$$u_s = \frac{\Delta t}{2}\left[ u_m(t_A) + 2 \sum_{\nu=1}^{\frac{t_E - t_A}{\Delta t} - 1} u_m(t_A + \nu \cdot \Delta t) + u_m(t_E) \right] \tag{8}$$

$$i_s = \frac{\Delta t}{2}\left[ i_m(t_A) + 2 \sum_{\nu=1}^{\frac{t_E - t_A}{\Delta t} - 1} i_m(t_A + \nu \cdot \Delta t) + i_m(t_E) \right] \tag{9}$$

$$i'_s = \frac{\Delta t}{2}\left[ i'_m(t_A) + 2 \sum_{\nu=1}^{\frac{t_E - t_A}{\Delta t} - 1} i'_m(t_A + \nu \cdot \Delta t) + i'_m(t_E) \right] \tag{10}$$

$$s_s = \frac{\Delta t}{2}\left[ \text{sign}\big(i_m(t_A)\big) + 2 \sum_{\nu=1}^{\frac{t_E - t_A}{\Delta t} - 1} \text{sign}\big(i_m(t_A + \nu \cdot \Delta t)\big) + \text{sign}\big(i_m(t_E)\big) \right] \tag{11}$$

$$t_s = \frac{t_E - t_A}{\Delta t}$$

Der Wert $t_s$ ist dabei die Anzahl der Wertepaare pro Wertesatz, $\Delta t$ entspricht dem Bezugzeichen dt, welches dem zeitlichen Abstand der abgetasteten Spannungswerte bzw. Stromgrößen respektive Wertepaare entspricht.

Die Variable $t_E$ entspricht der Zeit vom zeitlich letzten Wertepaar eines Wertesatzes, $t_A$ entspricht der Zeit vom zeitlich ersten Wertepaar des Wertesatzes.

Mit den Formel 8 bis 11 werden für einen Wertesatz jeweils die folgenden Terme berechnet:

(8) ein Zeit-Spannungssummen-Produkt ($u_s$), gebildet aus dem Zeitabstand (dt) und der Summe der Spannungswerte ($u_m$), wobei die Summe der Spannungswerte durch den halben ersten Spannungswert, den halben letzten Spannungswert und der Summe der übrigen Spannungswerte des Wertesatzes gebildet wird.

(9) ein Zeit-Stromsummen-Produkt ($i_s$), gebildet aus dem Zeitabstand (dt) und der Summe der Stromwerte, wobei die Summe des Stromwerte durch den halben ersten Stromwert, den halben letzten Stromwert und der Summe des übrigen Stromwerte des Wertesatzes gebildet wird.

(10) ein Zeit-Stromänderungswert-Produkt ($i'_s$), gebildet aus dem Zeitabstand (dt) und der Summe der Werte für die Änderung des Stromes nach der Zeit, wobei die Summe der Werte für die Änderung des Stromes nach der Zeit durch den halben ersten Wert, den halben letzten Wert und der Summe der übrigen Werte des Wertesatzes gebildet wird.

(11) ein Zeit-Vorzeichenwert-Produkt ($s_s$), gebildet aus dem Zeitabstand (dt) und der Summe der Vorzeichenwerte der Stromwerte, wobei ein Vorzeichenwert den Wert plus Eins bei positiven Stromwert, minus Eins bei negativen Stromwert und Null bei einem Stromwert von Null annimmt, wobei die Summe der Vorzeichenwerte aus dem halben Vorzeichenwert des ersten Stromwertes, dem halben Vorzeichenwert des letzten Stromwertes und der Summe der Vorzeichenwerte der übrigen Stromwerte gebildet wird.

Mit den substituierten Termen ergibt sich das Gleichungssystem entsprechend der Ansatzgleichung 5 zu:

$$u_s = R_{BM}i_s + L_{BM}i'_s + U_{LB}s_s \qquad (13)$$

Das Gleichungssystem enthält die drei unbekannten Variablen $R_{BM}$, $L_{BM}$ und $U_{LB}$. Für die Lösung dessen werden (mindestens) zwei, für eine sehr genaue Ermittlung drei, voneinander zeitlich unterschiedliche Integrationsgrenzen verwendet, beispielsweise durch erfindungsgemäße Verwendung zweier bzw. dreier Wertesätze.

$$u_{s1} = R_{BM}i_{s1} + L_{BM}i'_{s1} + U_{LB}s_{s1}$$
$$u_{s2} = R_{BM}i_{s2} + L_{BM}i'_{s2} + U_{LB}s_{s2} \qquad (14)$$
$$u_{s3} = R_{BM}i_{s3} + L_{BM}i'_{s3} + U_{LB}s_{s3}$$

Die Lichtbogenspannung $U_{LB}$ lässt sich folglich erfindungsgemäß beispielsweise mit der folgenden Formel berechnen.

$$U_{LB} = \frac{(u_{s3}i_{s2} - u_{s2}i_{s3})(i'_{s2}i_{s1} - i'_{s1}i_{s2}) - (u_{s2}i_{s1} - u_{s1}i_{s2})(i'_{s3}i_{s2} - i'_{s2}i_{s3})}{(s_{s1}i_{s2} - s_{s2}i_{s1})(i'_{s3}i_{s2} - i'_{s2}i_{s3}) - (s_{s2}i_{s3} - s_{s3}i_{s2})(i'_{s2}i_{s1} - i'_{s1}i_{s2})} \qquad (15)$$

Wobei $u_s$, $i_s$, $i'_s$, $s_s$ die Zeit-Spannungssummen-Produkte, Zeit-Stromsummen-Produkte, Zeit-Stromänderungswert-Produkte, Zeit-Vorzeichenwert-Produkte, gemäß Formel 8 bis 11, eines ersten, zweiten und dritten Wertesatzes sind, gemäß Index.

Das Kürzel sign bzw. sgn steht für die Signumfunktion respektive Vorzeichenfunktion. Diese Funktion ordnet einer Zahl ihr Vorzeichen zu. Diese ist wie folgt definiert:

```
sign(x) = +1, falls x>0;
```

```
sign(x) = 0, falls x=0;

sign(x) = -1, falls x<0.
```

Die Formel 14 besteht aus 12 Produkten P1,...,P12, die enthalten:

a) Produkte aus Zeit-Spannungssummen-Produkten $u_s$ und Zeit-Stromsummen-Produkten $i_s$,
b) Produkte aus Zeit-Stromdummen-Produkten $i_s$ und Zeit-Stromänderungswert-Produkten $i'_s$,
c) Produkte aus Zeit-Vorzeichenwert-Produkten $s_s$ und Zeit-Stromsummen-Produkte $i_s$.

$$U_{LB} = \frac{(P1 - P2)(P3 - P4) - (P5 - P6)(P7 - P8)}{(P9 - P10)(P7 - P8) - (P11 - P12)(P3 - P4)} \tag{15}$$

$$U_{LB} = \frac{D1 * D2 - D3 * D4}{D5 * D4 - D6 * D2} \tag{16}$$

$$U_{LB} = \frac{P13 - P14}{P15 - P16} \tag{17}$$

$$U_{LB} = \frac{D7}{D8} \tag{18}$$

Die 12 Produkte bilden 6 verschiedene Differenzen D1, ..., D6.

Die 6 Differenzen D1, ..., D6 bilden wiederum 4 übergeordnete Produkte P13, ..., P16. Diese bilden wiederum 2 übergeordnete Differenzen D7, D8, mit Hilfe denen eine Lichtbogenspannung ermittelt werden kann. Überschreitet diese betragsmäßig jeweils einen der ersten bis sechsten Schwellwerte, wird abhängig davon ein erstes bis sechstes Störlichtbogenerkennungssignal $D_{L1}$, $D_{L2}$, $D_{L3}$, $D_{L1-L2}$, $D_{L2-L3}$, $D_{L3-L1}$ abgegeben.

Die Lichtbogenspannung lässt sich ferner beispielsweise mit den folgenden, vereinfachten Formeln, die ebenfalls Lösungen der Integralgleichung sind, berechnen. Hierbei werden erfindungsgemäß nur zwei Wertesätze für die Ermittlung benötigt.

$$U_{LB} = \frac{u_{s2}i_{s1} - u_{s1}i_{s2}}{t_{s2}i_{s1} - t_{s1}i_{s2}} = \frac{P5 - P6}{P17 - P18} = \frac{D3}{D9}$$

$$U_{LB} = \frac{u_{s2}i_{s1} - u_{s1}i_{s2}}{s_{s2}i_{s1} - s_{s1}i_{s2}} = \frac{P5 - P6}{P10 - P9} = \frac{D3}{D10}$$

$$U_{LB} = \frac{u_{s2}i'_{s1} - u_{s1}i'_{s2}}{t_{s2}i'_{s1} - t_{s1}i'_{s2}} = \frac{P19 - P20}{P21 - P22} = \frac{D11}{D12}$$

$$U_{LB} = \frac{u_{s2}i'_{s1} - u_{s1}i'_{s2}}{s_{s2}i'_{s1} - s_{s1}i'_{s2}} = \frac{P19 - P20}{P23 - P24} = \frac{D11}{D13}$$

Eine weitere beispielhafte Berechnung unter Verwendung dreier Wertesätze ist in der nachfolgenden Formel gegeben.

$$U_{\text{LB}} = \frac{(u_{s2}i_{s1} - u_{s1}i_{s2})(i'_{s3}i_{s1} - i'_{s1}i_{s3}) - (u_{s3}i_{s1} - u_{s1}i_{s3})(i'_{s2}i_{s1} - i'_{s1}i_{s2})}{(t_{s1}i_{s3} - t_{s3}i_{s1})(i'_{s2}i_{s1} - i'_{s1}i_{s2}) - (t_{s1}i_{s2} - t_{s2}i_{s1})(i'_{s3}i_{s1} - i'_{s1}i_{s3})}$$

$$U_{\text{LB}} = \frac{(P5 - P6)(P25 - P26) - (P27 - P28)(P3 - P4)}{(P29 - P30)(P3 - P4) - (P18 - P17)(P25 - P26)}$$

$$U_{\text{LB}} = \frac{D3\,D14 - D15\,D2}{D16\,D2 - D17\,D14}$$

$$U_{\text{LB}} = \frac{P31 - P32}{P33 - P34}$$

$$U_{\text{LB}} = \frac{D18}{D19}$$

Jede Lösung der Integralgleichung, auch eine vereinfachte, stellt eine erfindungsgemäße Verwendung der Erfindung dar.

Beispielsweise kann der erste bis sechste Schwellwert bzw. dessen Betrag kann dabei bei 30 Volt liegen.

Allgemein gesagt kann der Schwellwert für ein Niederspannungsnetz im Bereich 20 bis 300 Volt liegen, konkreter im Bereich 20 bis 150 Volt, spezifischer im Bereich 20 bis 70 Volt. Insbesondere Werte von 25 bis 50 Volt scheinen gut geeignet zu sein.

Bei der Berechnung der Lichtbogenspannung mit der erfindungsgemäßen Auswertung können bei der Zündung eines Lichtbogens starke Änderungen auftreten. Für eine schnelle und stabile Berechnung der Lichtbogenspannung können deshalb noch Verbesserungen derart erfolgen, dass beispielsweise die Vorzeichen- bzw. Signumfunktion modifiziert wird.

Im Allgemeinen berechnet sich die Signumfunktion aus dem gemessenen Strom wie folgt:

$$s(t) = \text{sign}\big(i_{m}(t)\big)$$

Stabile Berechnungsergebnisse liegen häufig erst für die Zeit nach der Lichtbogenzündung vor, wenn die Messspannung den brennenden Lichtbogen komplett erfasst hat und in den zwei bzw. drei Integrationsintervalle bzw. Wertesätze komplett enthalten ist. Im Übergangsbereich kann es zu instabilen Berechnungsergebnissen kommen. Werden für diesen Bereich die Berechnungsergebnisse gefiltert, so erfolgt dadurch eine geringfügige Verzögerung der Detektion, allerdings mit sichereren Ermittlungsergebnissen. Erfindungsgemäß kann daher eine weitere Ausgestaltung verwendet werden, bei der die Signumfunktion auf den Wert Null gesetzt wird, wenn die ermittelte Spannung einen dreizehnten Schwellwert SW13, wie z.B. einen Spannungsschwellwert, unterschreitet.

$$s(t) = 0 \mid |u_{m}(t)| \leq U_{\text{I-RLs}}^{s}$$

Das Ergebnis der Signumfunktion wird z.B. immer Null gesetzt, wenn der Betrag des, beispielsweise zeitgleichen, Spannungswerts des Wertepaares kleiner-gleich dem dreizehnten Schwellwert SW13, wie $U_{\text{I-RLs}}^{s}$, ist. Als typischer Schwellwert kann hierfür z.B. der Anoden-Kathodenspannungsabfall von etwa 20 V angenommen werden, da davon auszugehen ist, dass unter diesem Wert kein Lichtbogen entstehen kann. Der dreizehnte Schwellwert SW13 bzw. $U_{\text{I-RLs}}^{s}$ kann jeden Wert im Bereich 5 bis 150 Volt, spezifischer im Bereich 10 Volt bis 50 Volt, insbesondere 15 bis 20 Volt annehmen.

Durch Einführung dieser Nebenbedingung für die Berechnung der Signumfunktion werden bei der Lichtbogenzündung eventuell auftretende Instabilitäten in der Berechnung der Lichtbogenspannung minimiert.

Um weiterhin unzulässige Berechnungsergebnisse zu vermeiden, kann erfindungsgemäß vorteilhaft die Lichtbogenspannung auf den Wert Null gesetzt werden, wenn die Summe der zwei bzw. drei Integrale $s_{s}$ der Signumfunktion

bzw. die Summe der zwei bzw. drei Zeit-Vorzeichenwert-Produkte $s_s$ den Wert Null ergibt.

$$U_{\mathrm{LB}} = 0\,\mathrm{V} \mid s_{s1} + s_{s2} = 0$$

$$U_{\mathrm{LB}} = 0\,\mathrm{V} \mid s_{s1} + s_{s2} + s_{s3} = 0$$

Die Störlichtbogenerkennung kann erfindungsgemäß mit weiteren Kriterien kombiniert werden. Beispielsweise mit einem weiteren Vergleich der Höhe des elektrischen Stromes des Stromkreises bzw. des jeweiligen Leiters oder erfindungsgemäßen Erdstromes. Der gemessene Strom, insbesondere der Effektivwert des gemessenen Stromes, der beispielsweise wie eingangs dargestellt oder nach der Methode von Mann-Morrison berechnet werden kann, wird dabei mit ersten bis vierten Stromschwellwerten SSW1, SSW2, SSW3, SSW4 verglichen. Wenn einer dieser Stromschwellwerte überschritten wird, wird abhängig davon ein erste, zweites, drittes oder/und viertes Überstromsignal $F_{L1}$, $F_{L2}$, $F_{L3}$, $F_E$ abgegeben.

Diese als Überstromfreigabe bezeichnetes Kriterium führt zu einer sicheren Fehlerabgrenzung. Für die Störlichtbogenerkennung muss ein minimaler Störlichtbogenstrom im Stromkreis fließen, um ein Störlichtbogenerkennungssignal zu bewirken.

Als Schwellwert für die Überstromfreigabe kann ein vom Betriebsstrom abhängiger Wert gewählt werden. Alternativ könnte die Schwellwertfestlegung auch lichtbogenspezifisch erfolgen, da für einen brennenden parallelen Niederspannungslichtbogen ein Lichtbogenstrom von üblicherweise 1000 A notwendig ist. Ein serieller Lichtbogen ist bei wesentlich geringeren Strömen möglich. D.h. der erste bis vierte Stromschwellwert kann je nach Einsatz bzw. Anwendung jeden Wert ab 1 A, 10 A, 100 A, 1000 A oder 5000 A aufweisen. Die Stromschwellwerte können betragsmäßig auch (annähernd) identisch sein.

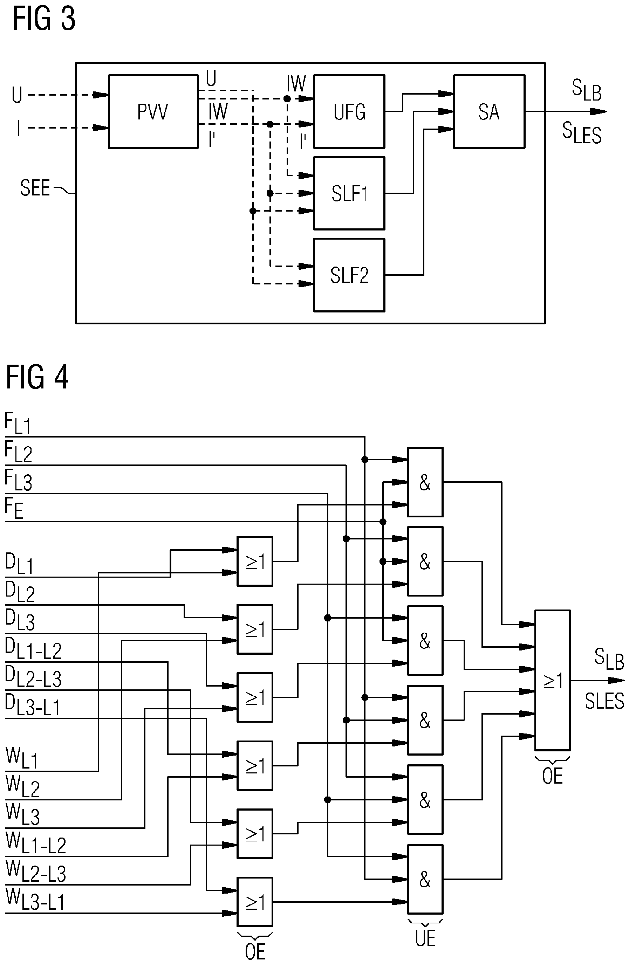

Figur 3 zeigt ein erstes Blockschaltbild einer erfindungsgemäßen Lösung. Dargestellt ist eine Störlichtbogenerkennungseinheit SEE, der ermittelte Größen für die Spannung U und dem Strom I zugeführt werden. Gezeichnet ist der einphasige Fall. Der dreiphasige Fall ergibt sich in analoger Weise. Der Strom I und die Spannung U werden einer Prozessgrößenvorverarbeitungseinheit PVV zugeführt, die aus den zugeführten Strom I einen Stromwert IW und einen Wert für die Änderung des Stromes nach der Zeit I' abgibt. Ferner kann hier eine Filterung des Stromes und/oder der Spannung, beispielsweise mit einem Tiefpassfilter erfolgen.

Die Spannung U und die Stromgrößen IW und I' werden einer ersten Störlichtbogenerkennungsfunktion SLF1 zugeführt, die daraus ein Störlichtbogenerkennungssignal ermittelt, beispielsweise eines der ersten sechs Störlichtbogenerkennungssignale, beispielsweise durch einen integrierenden Algorithmus, wie beschrieben.

Die Spannung U, gegebenenfalls der Strom IW bzw. I', wird einer zweiten Störlichtbogenerkennungsfunktion SLF2 zugeführt, die daraus ein weiteres Störlichtbogenerkennungssignal ermittelt, beispielsweise eines der siebten bis zwölften Störlichtbogenerkennungssignale, beispielsweise durch eine Teilsummenberechnung der Spannung, W-RU bzw. W-RUs Algorithmus, wie beschrieben.

Der Strom IW und gegebenenfalls die Änderung des Stromes I' werden einer Überstromfreigabe UFG zugeführt, die daraus ein Überstromsignal ermittelt, beispielsweise eines der vier Überstromsignale, wie beschrieben.

Das Überstromsignal und die beiden Störlichtbogensignale werden einer Signalauswertung bzw. Verknüpfung SA zugeführt, die bei Vorliegen eines Überstromsignals und eines der beiden (oder beider) Störlichtbogenerkennungssignale ein ausgangsseitiges Störlichtbogenerkennungssignal SLES bzw. $S_{\mathrm{LB}}$ abgibt.

Figur 4 zeigt ein zweites Blockschaltbild, analog zu Figur 3, mit der Auswertung für den dreiphasigen Fall. Die ersten sechs Störlichtbogenerkennungssignale $D_{L1}$, $D_{L2}$, $D_{L3}$, $D_{L1\text{-}L2}$, $D_{L2\text{-}L3}$, $D_{L3\text{-}L1}$ und die siebten bis zwölften Störlichtbogenerkennungssignale $W_{L1}$, $W_{L2}$, $W_{L3}$, $W_{L1\text{-}L2}$, $W_{L2\text{-}L3}$, $W_{L3\text{-}L1}$ sind Phase-Phase bzw. Phase-Neutralleiter bezogen jeweils Oderverknüpft, durch beispielsweise jeweils 6 Oder-Einheiten OE. Die Ausgänge der sechs Oder-Einheiten sind mit den vier Überstromsignalen $F_{L1}$, $F_{L2}$, $F_{L3}$, $F_E$ jeweils Und-verknüft, durch 6 Und-Einheiten UE, wie dargestellt. Die Ausgänge der sechs Und-Einheiten UE sind jeweils wieder Oder verknüpft, beispielsweise mittels einer Oder-Einheit OE. An dieser Oder-Einheit wird ein ausgangsseitiges Störlichtbogenerkennungssignal SLES bzw. $S_{\mathrm{LB}}$ abgegeben.

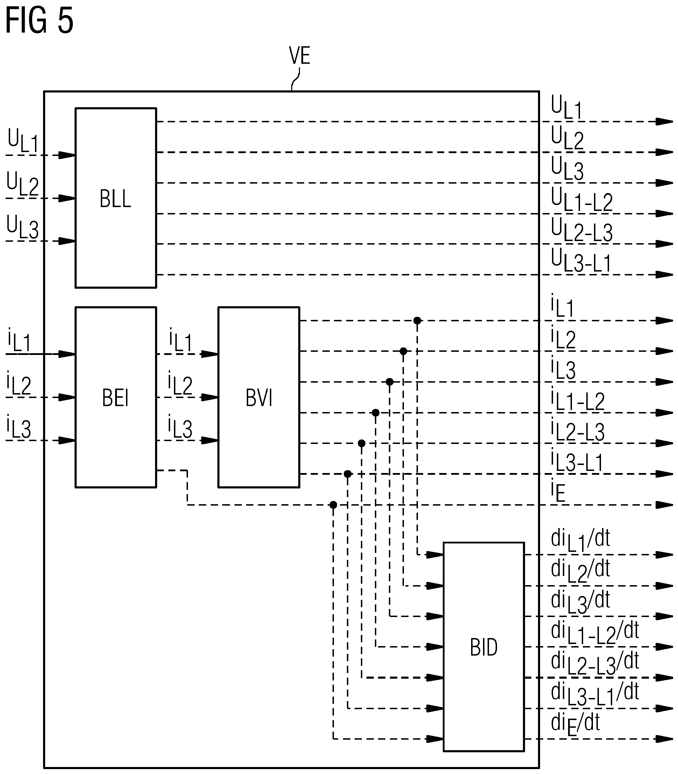

Figur 5 zeigt eine Verarbeitungseinheit VE, wie sie einer Störlichtbogenerkennungseinheit SEE vorgesehen sein kann. Dieser werden die Phasen-Neutralleiter-Spannungen zugeführt, die durch eine Berechnungseinheit BLL daraus die Phase-Phase-Spannungen ermittelt und abgibt.

Ferner werden die Phasenströme zugeführt, aus denen durch eine Berechnungseinheit BEI der Erdstrom ermittelt wird. Ferner wird durch eine Berechnungseinheit BVI der verkettete Strom ermittelt. Durch eine Berechnungseinheit BID wird die Änderung des Stromes nach der Zeit sowohl für die Phasen-Ströme als auch für die verketteten Ströme ermittelt. Die ermittelten Stromgrößen werden am Ausgang der Verarbeitungseinheit VE abgegeben.

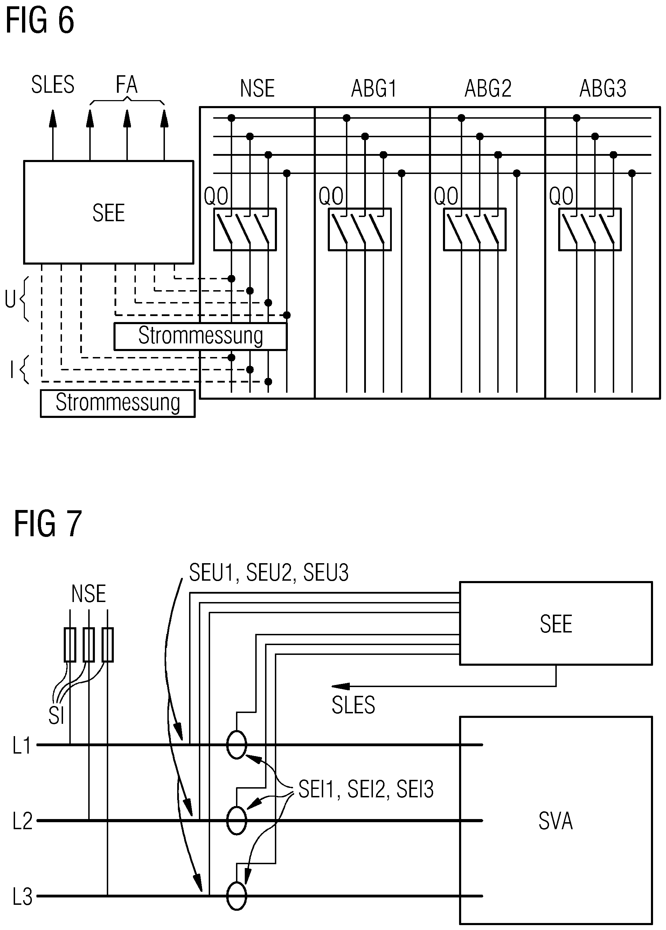

Figur 6 zeigt ein Beispiel einer Niederspannungseinspeisung NSE, die mehrere Abgänge ABG1, ABG2, ABG3 aufweist. In der Niederspannungseinspeisung NSE werden Spannungs- U und Stromwerte I ermittelt bzw. gemessen, die einer erfindungsgemäßen Störlichtbogenerkennungseinheit SEE zugeführt werden. Diese gibt im Falle von Störlichtbögen ein ausgangsseitige Störlichtbogenerkennungssignal SLES ab. Es können weitere Ausgänge FA vorgesehen sein.

Die Störlichtbogenerkennungseinheit muss nicht als geschlossene Baugruppe realisiert sein, sondern kann dezentral aufgebaut sein. Beispielsweise kann sie durch einen Mikroprozessor realisiert sein, der die erfindungsgemäßen Auswertungen durchführt.

Des Weiteren kann die Abgabe eines Störlichtbogenerkennungssignals erst dann erfolgen, wenn mindestens zweimal entsprechende Auswertewerte oder/und das Stromkriterium den entsprechenden Schwellwert überschreitet. Analog kann auch eine dreimalige, viermalige, fünfmalige, usw. Überschreitung des Schwellwertes zur Abgabe eines Störlichtbogenerkennungssignales führen. So wird eine besonders sichere Auswertung und Erkennung eines Störlichtbogens erreicht.

Figur 7 zeigt eine schematische Darstellung eines Übersichtsschaltbildes für eine Anlagenkonfiguration mit abgangsselektiver Störlichtbogenerkennungseinheit für die Erfassung von Störlichtbogen. Figur 7 zeigt eine NiederspannungsEinspeisung NSE, mit Sicherungen SI, denen Stromschienen bzw. Sammelschienen L1, L2, L3 für die Leiter eines Dreiphasen-Wechselstromnetzes bzw. Stromkreises folgen. Der Neutralleiter bzw. Nullleiter ist nicht dargestellt. Jeder der drei Stromschienen L1, L2, L3 ist jeweils ein Spannungssensor SEU1, SEU2, SEU3 und ein Stromsensor SEI1, SEI2, SEI3 zugeordnet. Die Stromschienen sind mit einer Schalt- oder/und Verteilanlage SVA verbunden.

Die Spannungs- und Stromsensoren sind mit einer erfindungsgemäßen Störlichtbogenerkennungseinheit SEE verbunden, die eine erfindungsgemäße Auswerteeinheit AE aufweist. Diese weist einen Ausgang zur Abgabe eines Störlichtbogenerkennungssignals SLES auf.

Die Spannungs- und Stromsensoren ermitteln Spannungswerte und Stromgrößen (Stromwert oder/und Stromwertänderung) der Sammelschienen L1, L2, L3 und führen sie der erfindungsgemäßen Störlichtbogenerkennungseinheit SEE zu.

Die Sensoren sind dabei außerhalb Störlichtbogenerkennungseinheit angeordnet und mit dieser verbunden.

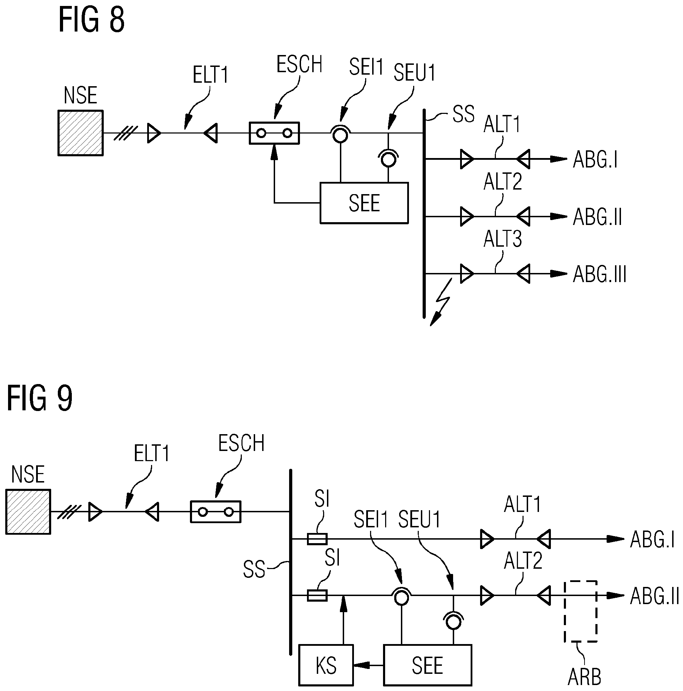

Figur 8 zeigt eine weitere schematische Darstellung eines Übersichtsschaltbildes für eine Anlagenkonfiguration mit zentraler Störlichtbogenerkennungseinheit für die Erfassung von Störlichtbogen. Figur 8 zeigt eine Niederspannungseinspeisung NSE, der ein Einspeise-Kabel ELT1 folgt, dem ein Einspeise-Schalter ESCH folgt, dem ein Stromsensor SEI1 und ein Spannungssensor SEU1 folgt, dem eine Sammelschien SS folgt. An der Sammelschiene SS sind 3 Abgänge ABG I ABG II und ABG III vorgesehen. Diesen ist je ein Abgangs-Kabel ALT1, ALT2, ALT3 zugeordnet.

Die Sensoren SEI1, SEU1 sind mit einer Störlichtbogenerkennungseinheit SEE verbunden, dessen Ausgang wiederum mit dem Einspeise-Schalter ESCH verbunden ist. Der Einspeise-Schalter kann dabei ein Leistungsschalter sein. Bei Erkennung eines Störlichtbogens kann der elektrische Stromkreis, d.h. die Stromversorgung der Sammelschiene SS unterbrochen werden, wenn beispielsweise in einem der Abgänge ein Störlichtbogen auftritt.

Figur 9 zeigt eine Darstellung gemäß Figur 8, mit dem Unterschied, dass die Sensoren im zweiten Abgang ABG II angeordnet sind, der zudem Sicherungen SI und einen Kurzschließer KS aufweist. Die Sensoren SEI1 und SEU1 erfassen Strom- und Spannungswerte des Abganges ABG II und geben diese an die Störlichtbogenerkennungseinheit SEE weiter. Erkennt die Störlichtbogenerkennungseinheit SEE einen Störlichtbogen, wird an ihrem Ausgang ein Störlichtbogenerkennungssignal SLES abgegeben und zum Kurzschließer KS übertragen. Dieser schließt daraufhin den Abgang ABG II kurz, um den Störlichtbogen zu löschen.

Die Störlichtbogenerkennung gemäß Figur 8 oder 9 kann beispielsweise als mobiles System ausgeführt sein.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Störlichtbogenerkennungseinheit für einen elektrischen Dreiphasenwechselstromkreis mit drei Phasenleitern und einem Neutralleiter, aufweisend

 - jedem Phasenleiter zugeordnete Spannungssensoren, zur periodischen Ermittlung von Phasen-Neutralleiter-Spannungswerten ($u_{L1}$, $u_{L2}$, $u_{L3}$) und Phasen-Phasen-Spannungswerten ($u_{L1-L2}$, $u_{L2-L3}$, $u_{L3-L1}$),
 - jedem Phasenleiter zugeordnete Stromsensoren, zur periodischen Ermittlung von Phasenleiter-Stromgrößen, aus denen der Phasenleiter-Stromwert ($i_{L1}$, $i_{L2}$, $i_{L3}$) und ein Wert für die Änderung des elektrischen Stromes nach der Zeit ($di_{L1}/dt$, $di_{L2}/dt$, $di_{L3}/dt$) ermittelt wird,
 - einer Auswerteeinheit, die mit den Spannungs- und Stromsensoren verbunden ist und derart ausgestaltet ist, dass:
 - aus den Phasenleiter-Stromwerten ($i_{L1}$, $i_{L2}$, $i_{L3}$) jeweils die Stromdifferenzen zweier Phasenleiter als verkettete Ströme ermittelt werden ($i_{L1-L2}$, $i_{L2-L3}$, $i_{L3-L1}$) und aus den Werten für die Änderung des elektrischen Stromes nach der Zeit pro Phase ($di_{L1}/dt$, $di_{L2}/dt$, $di_{L3}/dt$) jeweils die Änderungsdifferenzen zweier Phasenleiter als verkettete Änderungsstromwerte ermittelt werden,

- aus den Phasenleiter-Stromwerten ($i_{L1}$, $i_{L2}$, $i_{L3}$) ein Erdstrom ($i_E(v)$) ermittelt wird,
- für jeden Phasen-Stromwert ($i_{L1}$, $i_{L2}$, $i_{L3}$) und dem Erdstrom ($i_E(v)$) jeweils ein Stromeffektivwert ($I(v)$) ermittelt wird,
- der jeweilige Stromeffektivwert jeweils mit einem ersten, zweiten, dritten und vierten Stromschwellwert (SSW1, SSW2, SSW3, SSW4) verglichen wird und jeweils bei dessen Überschreitung ein erstes, zweites, drittes oder viertes Überstromsignal ($F_{L1}$, $F_{L2}$, $F_{L3}$, $F_E$) abgegeben wird,
- aus den Phasen-Neutralleiter-Spannungswerten ($u_{L1}$, $u_{L2}$, $u_{L3}$), Phasen-Phasen-Spannungswerten ($u_{L1-L2}$, $u_{L2-L3}$, $u_{L3-L1}$), Phasenleiter-Stromwerten ($i_{L1}$, $i_{L2}$, $i_{L3}$), verketten Strömen ($i_{L1-L2}$, $i_{L2-L3}$, $i_{L3-L1}$), Werten für die Änderung des elektrischen Stromes nach der Zeit ($di_{L1}/dt$, $di_{L2}/dt$, $di_{L3}/dt$) und verketteten Änderungsstromwerten pro Phase-Neutralleiter und pro Phase-Phase jeweils eine erste, zweite, dritte, vierte, fünfte und sechste Lichtbogenspannung berechnet wird, die mit ersten bis sechsten Schwellwerten verglichen wird, so dass ein erstes bis sechstes Störlichtbogenerkennungssignal

($D_{L1}$, $D_{L2}$, $D_{L3}$, $D_{L1-L2}$, $D_{L2-L3}$, $D_{L3-L1}$) abgegeben wird,

- dass aus den Phasen-Neutralleiter-Spannungswerten ($u_{L1}$, $u_{L2}$, $u_{L3}$) und Phasen-Phasen-Spannungswerten ($u_{L1-L2}$, $u_{L2-L3}$, $u_{L3-L1}$) jeweils eine siebte bis zwölfte Lichtbogenspannung berechnet wird, die mit siebten bis zwölften Schwellwerten verglichen wird, so dass ein siebtes bis zwölftes Störlichtbogenerkennungssignal ($W_{L1}$, $W_{L2}$, $W_{L3}$, $W_{L1-L2}$, $W_{L2-L3}$, $W_{L3-L1}$) abgeben wird,
- dass ein ausgangsseitiges Störlichtbogenerkennungssignal abgegeben wird, wenn mindestens ein Überstromsignal und ein Störlichtbogenerkennungssignal vorliegt.

2. Störlichtbogenerkennungseinheit nach Patentanspruch 1,
   **dadurch gekennzeichnet,**
   **dass** der zu messende Strom oder die ermittelten Stromgrößen mit einem Tiefpass gefiltert werden, so dass an Stelle der Phasenleiter-Stromwerte ($i_{L1}$, $i_{L2}$, $i_{L3}$) und Werte für die Änderung des elektrischen Stromes nach der Zeit ($di_{L1}/dt$, $di_{L2}/dt$, $di_{L3}/dt$) gefilterte Phasenleiter-Stromwerte ($i_{L1}$, $i_{L2}$, $i_{L3}$) und gefilterte Werte für die Änderung des elektrischen Stromes nach der Zeit ($di_{L1}/dt$, $di_{L2}/dt$, $di_{L3}/dt$) vorliegen, die für zumindest für einen Teil der weiteren Berechnung, insbesondere für die Berechnung der Stromeffektivwerte, verwendet werden.

3. Störlichtbogenerkennungseinheit nach Patentanspruch 2,
   **dadurch gekennzeichnet,**
   **dass** das Tiefpassfilter eine Grenzfrequenz im Bereich 50 Hertz bis 10000 Hertz, insbesondere im Bereich 50 Hertz bis 1000 Hertz, spezieller von 300 Hertz, aufweist.

4. Störlichtbogenerkennungseinheit nach Patentanspruch 2 oder 3,
   **dadurch gekennzeichnet,**
   **dass** das Tiefpassfilter ein Filter im Bereich 1 bis 6 Ordnung ist.

5. Störlichtbogenerkennungseinheit nach einem der vorhergehenden Patentansprüche,
   **dadurch gekennzeichnet,**
   **dass** ein ausgangsseitiges Störlichtbogenerkennungssignal abgegeben wird, wenn mindestens ein Überstromsignal und ein Störlichtbogenerkennungssignal der gleichen Phasen-Neutralleiter oder Phasen-Phasen Basis vorliegt.

6. Störlichtbogenerkennungseinheit nach einem der vorhergehenden Patentansprüche,
   **dadurch gekennzeichnet,**

   **dass** aus den Phasen-Neutralleiter-Spannungswerten ($u_{L1}$, $u_{L2}$, $u_{L3}$) und Phasen-Phasen-Spannungswerten ($u_{L1-L2}$, $u_{L2-L3}$, $u_{L3-L1}$) jeweils eine siebte bis zwölfte Lichtbogenspannung derart berechnet wird, dass pro Phasen-Neutralleiter- und Phasen-Phasen-Spannungswerten:

   - fortlaufend eine erste Hälfte einer ersten Anzahl Spanungswerte ($u(n)$, $u(k)$) zu einer ersten Teilsumme (TS1) und die zweite Hälfte an Spannungswerten ($u(n)$, $u(k)$) zu einer zweiten Teilsumme (TS2) aufsummiert wird,

   eine Differenz (DU) beider Teilsummen ermittelt wird,
   **dass** bei einer betragsmäßigen Überschreitung dieser siebten bis zwölften Differenz (DU) gegenüber den siebten bis zwölften Schwellwerten ein siebtes bis zwölftes Störlichtbogenerkennungssignal ($W_{L1}$, $W_{L2}$, $W_{L3}$, $W_{L1-L2}$, $W_{L2-L3}$, $W_{L3-L1}$) abgegeben wird.

7. Störlichtbogenerkennungseinheit nach Patentanspruch 6,
**dadurch gekennzeichnet,**
**dass** die erste Anzahl durch ein Zeitfenster bestimmt ist.

8. Störlichtbogenerkennungseinheit nach Patentanspruch 6 oder 7,
**dadurch gekennzeichnet,**
**dass** fortlaufend eine zweite Anzahl Differenzen (DU) zu einer Differenzensumme (DS) aufsummiert wird, an Stelle der Differenz (DU) die Differenzsumme (DS) mit Schwellwert verglichen wird und bei dessen betragsmäßiger Überschreitung ein Störlichtbogenerkennungssignal abgegeben wird.

9. Störlichtbogenerkennungseinheit nach einem der vorhergehenden Patentansprüche,
**dadurch gekennzeichnet,**
**dass** aus den Phasen-Neutralleiter-Spannungswerten ($u_{L1}$, $u_{L2}$, $u_{L3}$), Phasen-Phasen-Spannungswerten ($u_{L1-L2}$, $u_{L2-L3}$, $u_{L3-L1}$), Phasenleiter-Stromwerten ($i_{L1}$, $i_{L2}$, $i_{L3}$), verketten Strömen ($i_{L1-L2}$, $i_{L2-L3}$, $i_{L3-L1}$), Werten für die Änderung des elektrischen Stromes nach der Zeit ($di_{L1}/dt$, $di_{L2}/dt$, $di_{L3}/dt$) und verketteten Änderungsstromwerten pro Phase-Neutralleiter und pro Phase-Phase jeweils die erste, zweite, dritte, vierte, fünfte und sechste Lichtbogenspannung durch eine Integralgleichung oder deren Lösung durchgeführt wird.

10. Störlichtbogenerkennungseinheit nach einem der vorhergehenden Patentansprüche,
**dadurch gekennzeichnet,**
**dass** die Spannungswerte und Stromgrößen mit einem Vielfachen der Frequenz des Niederspannungsstromkreises ermittelt werden oder mit einer Abtastfrequenz im Bereich von 1-200 KHz.

11. Störlichtbogenerkennungseinheit nach einem der vorhergehenden Patentansprüche,
**dadurch gekennzeichnet,**
**dass** der Dreiphasenwechselstromkreis ein Niederspannungsstromkreis ist.

12. Leistungsschalter für einen elektrischen Niederspannungsstromkreis, aufweisend eine Störlichtbogenerkennungseinheit gemäß einem der Patentansprüche 1 bis 11, die mit dem Leistungsschalter verbunden ist und die derart ausgestaltet sind, dass bei Abgabe eines ausgangsseitigen Störlichtbogenerkennungssignals der Leistungsschalter auslöst, um den elektrischen Stromkreis zu unterbrechen.

13. Kurzschließer, aufweisend eine Störlichtbogenerkennungseinheit gemäß einem der Patentansprüche 1 bis 11, die mit dem Kurzschließer verbunden ist, und die derart ausgestaltet sind, dass bei Abgabe eines ausgangsseitigen Störlichtbogenerkennungssignals der Kurzschließer den elektrischen Stromkreis kurzschließt, um ein Löschen des Störlichtbogen zu bewirken.

14. Verfahren zur Störlichtbogenerkennung für einen elektrischen Dreiphasenwechselstromkreis mit drei Phasenleitern und einem Neutralleiter, bei dem periodisch elektrische Spannungswerte und Stromgrößen pro Phasenleiter ermittelt werden, so dass:

- Phasen-Neutralleiter-Spannungswerten ($u_{L1}$, $u_{L2}$, $u_{L3}$) und Phasen-Phasen-Spannungswerten ($u_{L1-L2}$, $u_{L2-L3}$, $u_{L3-L1}$) periodisch ermittelt werden,
- Phasenleiter-Stromwerte ($i_{L1}$, $i_{L2}$, $i_{L3}$) und Werte für die Änderung des elektrischen Stromes nach der Zeit pro Phase ($di_{L1}/dt$, $di_{L2}/dt$, $di_{L3}/dt$) ermittelt werden,
- aus den Phasenleiter-Stromwerten ($i_{L1}$, $i_{L2}$, $i_{L3}$) jeweils die Stromdifferenzen zweier Phasenleiter als verkettete Ströme ermittelt werden ($i_{L1-L2}$, $i_{L2-L3}$, $i_{L3-L1}$) und aus den Werten für die Änderung des elektrischen Stromes nach der Zeit pro Phase ($di_{L1}/dt$, $di_{L2}/dt$, $di_{L3}/dt$) jeweils die Änderungsdifferenzen zweier Phasenleiter als verkettete Änderungsstromwerte ermittelt werden,
- aus den Phasenleiter-Stromwerten ($i_{L1}$, $i_{L2}$, $i_{L3}$) ein Erdstrom ($i_E(v)$) ermittelt wird,
- für jeden Phasen-Stromwert ($i_{L1}$, $i_{L2}$, $i_{L3}$) und dem Erdstrom ($i_E(v)$) jeweils ein Stromeffektivwert ($I(v)$) ermittelt wird,
- der jeweilige Stromeffektivwert jeweils mit einem ersten, zweiten, dritten und vierten Stromschwellwert (SSW1, SSW2, SSW3, SSW4) verglichen wird und jeweils bei dessen Überschreitung ein erstes, zweites, drittes oder viertes Überstromsignal ($F_{L1}$, $F_{L2}$, $F_{L3}$, $F_E$) abgegeben wird,

- aus den Phasen-Neutralleiter-Spannungswerten ($u_{L1}$, $u_{L2}$, $u_{L3}$) , Phasen-Phasen-Spannungswerten ($u_{L1-L2}$, $u_{L2-L3}$, $u_{L3-L1}$) , Phasenleiter-Stromwerten ($i_{L1}$, $i_{L2}$, $i_{L3}$), verketten Strömen ($i_{L1-L2}$, $i_{L2-L3}$, $i_{L3-L1}$), Werten für die Änderung des elektrischen Stromes nach der Zeit ($di_{L1}/dt$, $di_{L2}/dt$, $di_{L3}/dt$) und verketteten Änderungsstromwerten pro Phase-Neutralleiter und pro Phase-Phase jeweils eine erste, zweite, dritte, vierte, fünfte und sechste Lichtbogenspannung berechnet wird, die mit ersten bis sechsten Schwellwerten verglichen wird, so dass ein erstes bis sechstes Störlichtbogenerkennungssignal

($D_{L1}$, $D_{L2}$, $D_{L3}$, $D_{L1-L2}$, $D_{L2-L3}$, $D_{L3-L1}$) abgeben wird,
- dass aus den Phasen-Neutralleiter-Spannungswerten ($u_{L1}$, $u_{L2}$, $u_{L3}$) und Phasen-Phasen-Spannungswerten ($u_{L1-L2}$, $u_{L2-L3}$, $u_{L3-L1}$) jeweils eine siebte bis zwölfte Lichtbogenspannung berechnet wird, die mit siebten bis zwölften Schwellwerten verglichen wird, so dass ein siebtes bis zwölftes Störlichtbogenerkennungssignal ($W_{L1}$, $W_{L2}$, $W_{L3}$, $W_{L1-L2}$, $W_{L2-L3}$, $W_{L3-L1}$) abgeben wird,
- dass ein ausgangsseitiges Störlichtbogenerkennungssignal abgegeben wird, wenn mindestens ein Überstromsignal und ein Störlichtbogenerkennungssignal vorliegt.

## Claims

1. Arc fault identification unit for an electrical three-phase alternating current circuit having three phase conductors and a neutral conductor, comprising

   - voltage sensors assigned to each phase conductor, for periodically determining phase-neutral conductor voltage values ($u_{L1}$, $u_{L2}$, $u_{L3}$) and phase-phase voltage values ($u_{L1-L2}$, $u_{L2-L3}$, $u_{L3-L1}$),
   - current sensors assigned to each phase conductor, for periodically determining phase conductor current variables used to determine the phase conductor current value ($i_{L1}$, $i_{L2}$, $i_{L3}$) and a value for the change in the electrical current with respect to time ($di_{L1}/dt$, $di_{L2}/dt$, $di_{L3}/dt$),
   - an evaluation unit, which is connected to the voltage and current sensors and is configured in such a way that:
   - from the phase conductor current values ($i_{L1}$, $i_{L2}$, $i_{L3}$) in each case the current differences of two phase conductors are determined as concatenated currents ($i_{L1-L2}$, $i_{L2-L3}$, $i_{L3-L1}$) and from the values for the change in the electrical current with respect to time per phase ($di_{L1}/dt$, $di_{L2}/dt$, $di_{L3}/dt$) in each case the change differences of two phase conductors are determined as concatenated change current values,
   - a ground current ($i_E(v)$) is determined from the phase conductor current values ($i_{L1}$, $i_{L2}$, $i_{L3}$),
   - a respective current root-mean-square value ($I(v)$) is determined for each phase current value ($i_{L1}$, $i_{L2}$, $i_{L3}$) and the ground current ($i_E(v)$),
   - the respective current root-mean-square value is compared in each case with a first, second, third and fourth current threshold value (SSW1, SSW2, SSW3, SSW4) and a first, second, third or fourth overcurrent signal ($F_{L1}$, $F_{L2}$, $F_{L3}$, $F_E$) is output respectively upon said current threshold value being exceeded,
   - from the phase-neutral conductor voltage values ($u_{L1}$, $u_{L2}$, $u_{L3}$), phase-phase voltage values ($u_{L1-L2}$, $u_{L2-L3}$, $u_{L3-L1}$), phase current values ($i_{L1}$, $i_{L2}$, $i_{L3}$), concatenated currents ($i_{L1-L2}$, $i_{L2-L3}$, $i_{L3-L1}$), values for the change in the electrical current with respect to time ($di_{L1}/dt$, $di_{L2}/dt$, $di_{L3}/dt$) and concatenated change current values per phase-neutral conductor and per phase-phase in each case a first, second, third, fourth, fifth and sixth arc voltage is calculated, which is compared with first to sixth threshold values, such that a first to sixth arc fault identification signal ($D_{L1}$, $D_{L2}$, $D_{L3}$, $D_{L1-L2}$, $D_{L2-L3}$, $D_{L3-L1}$) is output,
   - from the phase-neutral conductor voltage values ($u_{L1}$, $u_{L2}$, $u_{L3}$) and phase-phase voltage values ($u_{L1-L2}$, $u_{L2-L3}$, $u_{L3-L1}$) in each case a seventh to twelfth arc voltage is calculated, which is compared with seventh to twelfth threshold values, such that a seventh to twelfth arc fault identification signal ($W_{L1}$, $W_{L2}$, $W_{L3}$, $W_{L1-L2}$, $W_{L2-L3}$, $W_{L3-L1}$) is output,
   - an output-side arc fault identification signal is output if at least one overcurrent signal and one arc fault identification signal are present.

2. Arc fault identification unit according to Patent Claim 1, **characterized in that** the current to be measured or the current variables determined is/are filtered by a low-pass filter, such that instead of the phase conductor current values ($i_{L1}$, $i_{L2}$, $i_{L3}$) and values for the change in the electrical current with respect to time ($di_{L1}/dt$, $di_{L2}/dt$, $di_{L3}/dt$), filtered phase conductor current values ($i_{L1}$, $i_{L2}$, $i_{L3}$) and filtered values for the change in the electrical current with respect to time ($di_{L1}/dt$, $di_{L2}/dt$, $di_{L3}/dt$) are present, which are used at least for part of the further calculation, in particular for the calculation of the current root-mean-square values.

3. Arc fault identification unit according to Patent Claim 2, **characterized in that** the low-pass filter has a cut-off frequency in the range of 50 hertz to 10 000 hertz, in particular in the range of 50 hertz to 1000 hertz, more specifically of 300 hertz.

4. Arc fault identification unit according to Patent Claim 2 or 3,
   **characterized**
   **in that** the low-pass filter is a filter in the 1st to 6th order range.

5. Arc fault identification unit according to any of the preceding patent claims,
   **characterized**
   **in that** an output-side arc fault identification signal is output if at least one overcurrent signal and one arc fault identification signal of the same phase-neutral conductor or phase-phase basis are present.

6. Arc fault identification unit according to any of the preceding patent claims,
   **characterized**

   **in that** from the phase-neutral conductor voltage values ($u_{L1}$, $u_{L2}$, $u_{L3}$) and phase-phase voltage values ($u_{L1-L2}$, $u_{L2-L3}$, $u_{L3-L1}$) in each case a seventh to twelfth arc voltage is calculated in such a way that per phase-neutral conductor and phase-phase voltage values:

   - continuously a first half of a first number of voltage values ($u(n)$, $u(k)$) is summed to form a first subtotal (TS1) and the second half of voltage values ($u(n)$, $u(k)$) is summed to form a second subtotal (TS2),

   a difference (DU) between the two subtotals is determined, in that in the event of these seventh to twelfth differences (DU) exceeding the seventh to twelfth threshold values in terms of magnitude, a seventh to twelfth arc fault identification signal ($W_{L1}$, $W_{L2}$, $W_{L3}$, $W_{L1-L2}$, $W_{L2-L3}$, $W_{L3-L1}$) is output.

7. Arc fault identification unit according to Patent Claim 6,
   **characterized**
   **in that** the first number is determined by a time window.

8. Arc fault identification unit according to Patent Claim 6 or 7,
   **characterized**
   **in that** continuously a second number of differences (DU) is summed to form a difference total (DS), instead of the difference (DU) the difference total (DS) is compared with a threshold value and, in the event of the latter being exceeded in terms of magnitude, an arc fault identification signal is output.

9. Arc fault identification unit according to any of the preceding patent claims,
   **characterized**
   **in that** from the phase-neutral conductor voltage values ($u_{L1}$, $u_{L2}$, $u_{L3}$), phase-phase voltage values ($u_{L1-L2}$, $u_{L2-L3}$, $u_{L3-L1}$), phase conductor current values ($i_{L1}$, $i_{L2}$, $i_{L3}$), concatenated currents ($i_{L1-L2}$, $i_{L2-L3}$, $i_{L3-L1}$), values for the change in the electrical current with respect to time ($di_{L1}/dt$, $di_{L2}/dt$, $di_{L3}/dt$) and concatenated change current values per phase-neutral conductor and per phase-phase, in each case the first, second, third, fourth, fifth and sixth arc voltages are implemented by an integral equation or the solution thereof.

10. Arc fault identification unit according to any of the preceding patent claims,
    **characterized**
    **in that** the voltage values and current variables are determined with a multiple of the frequency of the low-voltage circuit or with a sampling frequency in the range of 1-200 kHz.

11. Arc fault identification unit according to any of the preceding patent claims,
    **characterized**
    **in that** the three-phase alternating current circuit is a low-voltage circuit.

12. Circuit breaker for an electrical low-voltage circuit, comprising an arc fault identification unit according to any of Patent Claims 1 to 11, which is connected to the circuit breaker and which are configured in such a way that when an output-side arc fault identification signal is output, the circuit breaker trips in order to interrupt the electrical circuit.

13. Short-circuiter, comprising an arc fault identification unit according to any of Patent Claims 1 to 11, which is connected to the short-circuiter, and which are configured in such a way that when an output-side arc fault identification signal is output, the short-circuiter short-circuits the electrical circuit in order to cause the arc fault to be quenched.

14. Method for arc fault identification for an electrical three-phase alternating current circuit having three phase conductors and a neutral conductor, in which electrical voltage values and current variables are periodically determined per phase conductor, such that:

- phase-neutral conductor voltage values ($u_{L1}$, $u_{L2}$, $u_{L3}$) and phase-phase voltage values ($u_{L1-L2}$, $u_{L2-L3}$, $u_{L3-L1}$) are determined periodically,
- phase conductor current values ($i_{L1}$, $i_{L2}$, $i_{L3}$) and values for the change in the electrical current with respect to time per phase ($di_{L1}/dt$, $di_{L2}/dt$, $di_{L3}/dt$) are determined,

  - from the phase conductor current values ($i_{L1}$, $i_{L2}$, $i_{L3}$) in each case the current differences of two phase conductors are determined as concatenated currents ($i_{L1-L2}$, $i_{L2-L3}$, $i_{L3-L1}$) and from the values for the change in the electrical current with respect to time per phase ($di_{L1}/dt$, $di_{L2}/dt$, $di_{L3}/dt$) in each case the change differences of two phase conductors are determined as concatenated change current values,
  - a ground current ($i_E(v)$) is determined from the phase conductor current values ($i_{L1}$, $i_{L2}$, $i_{L3}$),
  - a respective current root-mean-square value ($I(v)$) is determined for each phase current value ($i_{L1}$, $i_{L2}$, $i_{L3}$) and the ground current ($i_E(v)$),
  - the respective current root-mean-square value is compared in each case with a first, second, third and fourth current threshold value (SSW1, SSW2, SSW3, SSW4) and a first, second, third or fourth overcurrent signal ($F_{L1}$, $F_{L2}$, $F_{L3}$, $F_E$) is output respectively upon said current threshold value being exceeded,
  - from the phase-neutral conductor voltage values ($u_{L1}$, $u_{L2}$, $u_{L3}$), phase-phase voltage values ($u_{L1-L2}$, $u_{L2-L3}$, $u_{L3-L1}$), phase conductor current values ($i_{L1}$, $i_{L2}$, $i_{L3}$), concatenated currents ($i_{L1-L2}$, $i_{L2-L3}$, $i_{L3-L1}$), values for the change in the electrical current with respect to time ($di_{L1}/dt$, $di_{L2}/dt$, $di_{L3}/dt$) and concatenated change current values per phase-neutral conductor and per phase-phase, in each case a first, second, third, fourth, fifth and sixth arc voltage is calculated, which is compared with first to sixth threshold values, such that a first to sixth arc fault identification signal ($D_{L1}$, $D_{L2}$, $D_{L3}$, $D_{L1-L2}$, $D_{L2-L3}$, $D_{L3-L1}$) is output,
  - from the phase-neutral conductor voltage values ($u_{L1}$, $u_{L2}$, $u_{L3}$) and phase-phase voltage values ($u_{L3-L2}$, $u_{L2-L3}$, $u_{L3-L1}$) in each case a seventh to twelfth arc voltage is calculated, which is compared with seventh to twelfth threshold values, such that a seventh to twelfth arc fault identification signal ($W_{L1}$, $W_{L2}$, $W_{L3}$, $W_{L1-L2}$, $W_{L2-L3}$, $W_{L3-L1}$) is output,
  - an output-side arc fault identification signal is output if at least one overcurrent signal and one arc fault identification signal are present.

**Revendications**

1. Unité de détection d'arc électrique parasite destinée à un circuit de courant alternatif triphasé électrique comprenant trois phases et un neutre, présentant

   - des capteurs de tension attribués à chacune des phases pour la détection périodique de valeurs de tension de phases/neutre ($u_{L1}$, $u_{L2}$, $u_{L3}$) et de valeurs de tension de phase/phase ($u_{L1-L2}$, $u_{L2-L3}$, $u_{L3-L1}$),
   - des capteurs de courant attribués à chacune des phases pour déterminer périodiquement les grandeurs de courant de phase, valeurs sur la base desquelles on détermine la valeur de courant de phase ($i_{L1}$, $i_{L2}$, $i_{L3}$) et une valeur pour la variation du courant électrique en fonction du temps ($di_{L1}/dt$, $di_{L2}/dt$, $di_{L3}/dt$),
   - une unité d'évaluation reliée aux capteurs de tension et de courant et conçue de sorte que :
   - à partir des valeurs de courant des phases ($i_{L1}$, $i_{L2}$, $i_{L3}$), on détermine les différences de courant de deux phases comme courants concaténés ($i_{L1-L2}$, $i_{L2-L3}$, $i_{L3-L1}$) et à partir des valeurs de variation du courant électrique en fonction du temps par phase ($di_{L1}/dt$, $di_{L2}/dt$, $di_{L3}/dt$), on détermine respectivement les différences de variation de deux phases comme des valeurs de courant de variation concaténées,
   - à partir des valeurs de courant des phases ($i_{L1}$, $i_{L2}$, $i_{L3}$), on détermine une terre ($i_E(v)$),
   - pour chaque valeur de courant de phase ($i_{L1}$, $i_{L2}$, $i_{L3}$) et pour la terre ($i_E(v)$), on détermine une valeur effective du courant ($I(v)$) respective,
   - la valeur respective effective du courant est comparée respectivement à un premier, un deuxième, un troisième et un quatrième seuil de courant (SSW1, SSW2, SSW3, SSW4) et un premier, un deuxième, un troisième ou un quatrième signal de surintensité est respectivement émis en cas de dépassement dudit seuil ($F_{L1}$, $F_{L2}$, $F_{L3}$, $F_E$),

- à partir des valeurs de tension phase/neutre ($u_{L1}$, $u_{L2}$, $u_{L3}$), des valeurs de tension phase/phase ($u_{L1-L2}$, $u_{L2-L3}$, $u_{L3-L1}$), des valeurs de courant des phases ($i_{L1}$, $i_{L2}$, $i_{L3}$), des courants concaténés ($i_{L1-L2}$, $i_{L2-L3}$, $i_{L3-L1}$), des valeurs de variation du courant électrique en fonction du temps ($di_{L1}/dt$, $di_{L2}/dt$, $di_{L3}/dt$) et des valeurs de courant de variation concaténées, on calcule par phase/neutre et par phase/phase respectivement une première, une deuxième, une troisième, une quatrième, une cinquième et une sixième tension d'arc électrique, qui est comparée avec des premier à sixième seuils, de manière telle qu'un premier à sixième signal de détection d'arc électrique ($D_{L1}$, $D_{L2}$, $D_{L3}$, $D_{L1-L2}$, $D_{L2-L3}$, $D_{L3-L1}$) est émis,

- à partir des valeurs de tension phase/neutre ($u_{L1}$, $u_{L2}$, $u_{L3}$) et phase/phase ($u_{L1-L2}$, $u_{L2-L3}$, $u_{L3-L1}$), on calcule respectivement une septième à douzième tension d'arc électrique qui est comparée avec des septième à douzième seuils, de manière telle qu'un septième à douzième signal de détection d'arc électrique ($W_{L1}$, $W_{L2}$, $W_{L3}$, $W_{L1-L2}$, $W_{L2-L3}$, $W_{L3-L1}$) est émis,

- qu'un signal de détection d'arc électrique est émis en sortie lorsqu'au moins un signal de surintensité et un signal de détection d'arc électrique sont présents.

2. Unité de détection d'un arc électrique parasite selon la revendication 1, **caractérisée en ce que** le courant à mesurer ou les grandeurs de courant déterminées sont filtré(e)s à l'aide d'un filtre passe-bas, de manière telle qu'au lieu des valeurs de courant de phase ($i_{L1}$, $i_{L2}$, $i_{L3}$) et des valeurs pour la variation du courant électrique en fonction du temps ($di_{L1}/dt$, $di_{L2}/dt$, $di_{L3}/dt$), on obtient des valeurs de courant de phase filtrées ($i_{L1}$, $i_{L2}$, $i_{L3}$) et des valeurs filtrées pour la variation du courant électrique en fonction du temps ($di_{L1}/dt$, $di_{L2}/dt$, $di_{L3}/dt$) qui sont utilisées pour au moins une partie du calcul ultérieur, en particulier pour le calcul des valeurs effectives de courant.

3. Unité de détection d'un arc électrique parasite selon la revendication 2, **caractérisée en ce que** le filtre passe-bas présente une fréquence limite dans une plage entre 50 Hertz et 10000 Hertz, en particulier entre 50 Hertz et 1000 Hertz, plus particulièrement de 300 Hertz.

4. Unité de détection d'arc électrique parasite selon la revendication 2 ou 3, **caractérisée en ce que** le filtre passe-bas est un filtre dans la plage d'ordre de 1 à 6.

5. Unité de détection d'arc électrique parasite selon l'une quelconque des revendications précédentes, **caractérisée en ce qu'**un signal de détection d'arc électrique est émis en sortie lorsqu'au moins un signal de surintensité et un signal de détection d'arc électrique sont présents sur la même base phase/neutre ou phase/phase.

6. Unité de détection d'arc électrique parasite selon l'une quelconque des revendications précédentes, **caractérisée en ce que** :

sur la base des valeurs de tension phase/neutre ($u_{L1}$, $u_{L2}$, $u_{L3}$) et des valeurs de tension phase/phase ($u_{L1-L2}$, $u_{L2-L3}$, $u_{L3-L1}$), une septième à douzième tension d'arc électrique respective est calculée de sorte que par valeur de tension phase/neutre et phase/phase :

- on additionne en continu une première moitié d'un premier nombre de valeurs de tension ($u(n)$, $u(k)$) pour obtenir une première somme partielle (TS1) et la deuxième moitié des valeurs de tension ($u(n)$, $u(k)$) pour obtenir une deuxième somme partielle (TS2),

on détermine une différence (DU) des deux sommes partielles, en cas de dépassement en valeur absolue desdites septième à douzième différences (DU) par rapport aux septième à douzième valeurs de seuil, un septième à douzième signal de détection d'arc électrique parasite ($W_{L1}$, $W_{L2}$, $W_{L3}$, $W_{L1-L2}$, $W_{L2-L3}$, $W_{L3-L1}$) est émis.

7. Unité de détection d'arc électrique parasite selon la revendication 6, **caractérisée en ce que** le premier nombre est déterminé par une fenêtre temporelle.

8. Unité de détection d'arc électrique parasite selon la revendication 6 ou 7, **caractérisée en ce qu'**un deuxième nombre de différences (DU) est additionné de manière continue à une somme différentielle (DS), à la place de la différence (DU), la somme différentielle (DS) est comparée à un seuil et qu'en cas de dépassement de ce dernier en valeur absolue, un signal de détection d'arc électrique parasite est émis.

9. Unité de détection d'arc électrique parasite selon l'une quelconque des revendications précédentes, **caractérisée en ce qu'** à partir des valeurs de tension phase/neutre ($u_{L1}$, $u_{L2}$, $u_{L3}$), des valeurs de tension phase/phase ($u_{L1-L2}$,

$u_{L2-L3}$, $u_{L3-L1}$), des valeurs de courant de phase ($i_{L1}$, $i_{L2}$, $i_{-L3}$), des courants concaténés ($i_{L1-L2}$, $i_{L2-L3}$, $i_{L3-L1}$), des valeurs de variation du courant électrique en fonction du temps ($di_{L1}/dt$, $di_{L2}/dt$, $di_{L3}/dt$) et des valeurs de courant de variation concaténées, on réalise par phase/neutre et par phase/phase respectivement les première, deuxième, troisième, quatrième, cinquième et sixième tensions d'arc électrique à l'aide d'une équation intégrale ou de sa solution.

10. Unité de détection d'arc électrique parasite selon l'une quelconque des revendications précédentes, **caractérisée en ce que** les valeurs de tension et grandeurs de courant sont déterminées par un multiple de la fréquence du circuit électrique basse tension ou par une fréquence de balayage dans une plage comprise entre 1 et 200 kHz.

11. Unité de détection d'arc électrique parasite selon l'une quelconque des revendications précédentes, **caractérisée en ce que** le circuit alternatif triphasé est un circuit basse tension.

12. Commutateur de puissance pour un circuit électrique basse tension, présentant une unité de détection d'arc électrique parasite selon l'une quelconque des revendications 1 à 11 reliée au commutateur de puissance et conçue de manière telle que lors de l'émission d'un signal de détection d'arc électrique en sortie, le commutateur de puissance déclenche pour interrompre le circuit électrique.

13. Court-circuiteur, présentant une unité de détection d'arc électrique parasite selon l'une quelconque des revendications 1 à 11 reliée au court-circuiteur et conçue de manière telle que lors de l'émission d'un signal de détection d'arc électrique parasite en sortie, le court-circuiteur court-circuite le circuit électrique afin de faire éteindre l'arc électrique parasite.

14. Procédé de détection d'arc électrique parasite destiné à un circuit électrique alternatif triphasé comprenant trois phases et un neutre, dans lequel des valeurs de tension électrique et des grandeurs de courant sont déterminées périodiquement par phase, de manière telle que :

- des valeurs de tension phase/neutre ($u_{L1}$, $u_{L2}$, $u_{L3}$) et des valeurs de tension phase/phase ($u_{L1-L2}$, $u_{L2-L3}$, $u_{L3-L1}$) sont déterminées périodiquement,
- on détermine des valeurs de courant des phases ($i_{L1}$, $i_{L2}$, $i_{L3}$) et des valeurs de variation du courant électrique en fonction du temps par phase ($di_{L1}/dt$, $di_{L2}/dt$, $di_{L3}/dt$),
- à partir des valeurs de courant des phases ($i_{L1}$, $i_{L2}$, $i_{L3}$), on détermine les différences de courant de deux phases comme courants concaténés ($i_{L1-L2}$, $i_{L2-L3}$, $i_{L3-L1}$) et à partir des valeurs de variation du courant électrique en fonction du temps par phase ($di_{L1}/dt$, $di_{L2}/dt$, $di_{L3}/dt$), on détermine respectivement les différences de variation de deux phases comme des valeurs de courant de variation concaténées,
- à partir des valeurs de courant de phase ($i_{L1}$, $i_{L2}$, $i_{L3}$), on détermine un courant de terre ($i_E(v)$),
- pour chaque valeur de courant de phase ($i_{L1}$, $i_{L2}$, $i_{L3}$) et le courant de terre ($i_E(v)$), on détermine une valeur effective de courant ($I(v)$),
- la valeur effective du courant respective est comparée respectivement à un premier, un deuxième, un troisième et un quatrième seuil de courant (SSW1, SSW2, SSW3, SSW4) et un premier, un deuxième, un troisième ou un quatrième signal de surintensité est respectivement émis en cas de dépassement dudit seuil ($F_{L1}$, $F_{L2}$, $F_{L3}$, $F_E$),
- à partir des valeurs de tension phase/neutre ($u_{L1}$, $u_{L2}$, $u_{L3}$), des valeurs de tension phase/phase ($u_{L1-L2}$, $u_{L2-L3}$, $u_{L3-L1}$), des valeurs de courant des phases ($i_{L1}$, $i_{L2}$, $i_{L3}$), des courants concaténés ($i_{L1-L2}$, $i_{L2-L3}$, $i_{L3-L1}$), des valeurs de variation du courant électrique en fonction du temps ($di_{L1}/dt$, $di_{L2}/dt$, $di_{L3}/dt$) et des valeurs de courant de variation concaténées, on calcule respectivement par phase/neutre et par phase/phase une première, une deuxième, une troisième, une quatrième, une cinquième et une sixième tensions d'arc électrique, qui sont comparées avec des premier à sixième seuils, de manière telle qu'un premier à sixième signal de détection d'arc électrique parasite ($D_{L1}$, $D_{L2}$, $D_{L3}$, $D_{L1-L2}$, $D_{L2-L3}$, $D_{L3-L1}$) est émis,
- à partir des valeurs de tension phase/neutre ($u_{L1}$, $u_{L2}$, $u_{L3}$) et phase/phase ($u_{L1-L2}$, $u_{L2-L3}$, $u_{L3-L1}$), on calcule respectivement une septième à douzième tensions d'arc électrique qui sont comparées avec des septième à douzième seuils, de manière telle qu'un septième à douzième signal de détection d'arc électrique parasite ($W_{L1}$, $W_{L2}$, $W_{L3}$, $W_{L1-L2}$, $W_{L2-L3}$, $W_{L3-L1}$) est émis,
- un signal de détection d'arc électrique parasite est émis en sortie lorsqu'au moins un signal de surintensité et un signal de détection d'arc électrique parasite sont présents.

FIG 1

FIG 2

# FIG 3

# FIG 4

## FIG 5

FIG 6

FIG 7

EP 3 443 626 B1

FIG 8

FIG 9

35

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009008871 A1
- US 2006012931 A1
- EP 2916455 A1